(19)

Europäisches
Patentamt

European
Patent Office

Office européen
des brevets

(11) **EP 4 528 963 A1**

(12) **EUROPEAN PATENT APPLICATION**
published in accordance with Art. 153(4) EPC

(43) Date of publication:
**26.03.2025 Bulletin 2025/13**

(21) Application number: 23807627.7

(22) Date of filing: **16.05.2023**

(51) International Patent Classification (IPC):
*H02J 3/16* $^{(2006.01)}$        *F24F 11/80* $^{(2018.01)}$
*H02J 3/18* $^{(2006.01)}$        *H02J 3/32* $^{(2006.01)}$
*H02J 3/38* $^{(2006.01)}$        *H02J 13/00* $^{(2006.01)}$

(52) Cooperative Patent Classification (CPC):
**H02J 3/1892; H02J 3/16; H02J 3/18; H02J 3/32;
H02J 3/38; H02J 3/381; H02J 13/00;** F24F 2110/80;
H02J 2300/24; Y02E 40/30

(86) International application number:
**PCT/JP2023/018225**

(87) International publication number:
**WO 2023/224025 (23.11.2023 Gazette 2023/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.05.2022 JP 2022080457**

(71) Applicant: DAIKIN INDUSTRIES, LTD.
**Osaka-shi, Osaka 530-0001 (JP)**

(72) Inventors:
• KONO, Masaki
  **Osaka-shi, Osaka 530-0001 (JP)**
• KAWASHIMA, Reiji
  **Osaka-shi, Osaka 530-0001 (JP)**
• OTA, Keisuke
  **Osaka-shi, Osaka 530-0001 (JP)**

(74) Representative: **Hoffmann Eitle
Patent- und Rechtsanwälte PartmbB
Arabellastraße 30
81925 München (DE)**

(54) **POWER CONTROL SYSTEM, LOAD DEVICE, CONTROL METHOD, AND INFORMATION PROCESSING DEVICE**

(57)    A power control system includes: an acquisition unit configured to acquire supply information relating to supply of power to electric lines by a power generator for generating power and supplying the power to the electric lines; and a control unit configured to control, according to the supply information acquired by the acquisition unit, supply of reactive power to the electric lines by a load device including a compensating power supply unit capable of supplying reactive power to the electric lines.

**EP 4 528 963 A1**

# FIG.5

SOLAR POWER GENERATOR
- 31 — POWER GENERATOR
- 30 — INFORMATION PROCESSING DEVICE
  - 301 — COMMUNICATION PROCESSING UNIT
  - 302 — SIGNAL GENERATION UNIT
  - 303 — INFORMATION MANAGEMENT UNIT

AIR CONDITIONER
- 41 — HEAT PUMP DEVICE
- 40 — INFORMATION PROCESSING DEVICE
  - 401 — COMMUNICATION PROCESSING UNIT
  - 402 — SIGNAL GENERATION UNIT
  - 403 — INFORMATION MANAGEMENT UNIT

CONTROL DEVICE
- 101 — COMMUNICATION PROCESSING UNIT
- 102 — REQUIRED AMOUNT CALCULATION UNIT
- 103 — RESPONSIBLE DEVICE DETERMINATION UNIT
- 104 — CONTRIBUTION DETERMINATION UNIT
- 105 — COMMAND CREATION UNIT
- 106 — BILLING DETERMINATION UNIT

MANAGEMENT SERVER
- COMMUNICATION PROCESSING DEVICE
- DEVICE INFORMATION MANAGEMENT UNIT
- HISTRY MANAGEMENT UNIT
- BILLING DETERMINATION UNIT

## Description

Technical Field

The present disclosure relates to a power control system, a load device, a control method, and an information processing device.

Background Art

With the increased deployment of power generators such as solar and wind power generators, voltage rise in electric lines in electric power systems has been a problem.

Patent Literature 1 discloses calculating a reactive power output from an inverter required to make a power factor of an AC system and a consumer greater than or equal to a predetermined power factor based on the state quantity for calculating the power factor at an association point between the AC system and the consumer and thus controlling the inverter, thereby maintaining the power factor at or above the predetermined value.

Patent Literature 2 discloses, for multiple inverters provided in multiple solar cells, reducing a power factor of a first inverter whose corresponding solar cell is in a reduced electricity output state and increasing a power factor of a second inverter whose corresponding solar cell is not in the reduced electricity output state, thereby preventing a decrease in power generated from the entire solar power generation system.

Citation List

Patent Literature

    Patent Literature 1: Japanese Patent Application
    Laid-Open Publication No. 2020-182276
    Patent Literature 2: Japanese Patent No. 6713237

Summary of Invention

Technical Problem

In order to prevent a voltage rise in electric lines, the supply of reactive power from power generators to the electric lines may be controlled to make the electric lines have a predetermined power factor. In this case, despite the opportunities available to increase the amount of power generation (e.g., during sunny days for solar power generation), there is a limited supply of real power to the electric lines. Consequently, the maximum amount of power is not generated, resulting in a loss of power generation opportunities.

An object of the present disclosure to provide techniques for preventing a loss of power generation opportunities, compared to controlling the power factor of electric lines only through the supply of reactive power from the power generators to the electric lines.

Solution to Problem

A power control system according to the present disclosure includes: an acquisition unit configured to acquire supply information relating to supply of power to electric lines by a power generator for generating power and supplying the power to the electric lines; and a control unit configured to control, according to the supply information acquired by the acquisition unit, supply of reactive power to the electric lines by a load device including a compensating power supply unit capable of supplying reactive power to the electric lines. This feature can reduce the loss of power generation opportunities, compared to controlling the power factor of the electric lines only through the supply of reactive power from the power generator to the electric lines.

The load device may include a plurality of load devices distributed on the electric lines, and the control unit may be configured to control the supply of reactive power to the electric lines by the plurality of load devices according to the supply information. This feature of controlling multiple load devices improves the flexibility in power factor control, compared to controlling only one load device.

A point of common coupling on the electric lines at which the power generator is coupled to an electric power system may be different from points on the electric lines at which the plurality of load devices is coupled to the electric power system. This feature of controlling load devices connected at different points from the point of common coupling improves the flexibility in power factor control, compared to controlling only load devices connected at the same point.

The plurality of load devices may be connected via a transformer to a distribution line on the electric power system, the distribution line being connected to the power generator via the point of common coupling. This feature of controlling multiple load devices connected to the same distribution line as the power generator improves the accuracy of control, compared to controlling load devices connected to a different distribution line.

The load device may include a plurality of load devices that are connected to an electric power system at a same point as a point of common coupling on the electric lines at which the power generator is coupled to the electric power system, and the control unit may be configured to control the supply of reactive power to the electric lines by the plurality of load devices according to the supply information acquired by the acquisition unit. This feature of controlling multiple load devices connected at the same point as the point of common coupling of the power generator improves the accuracy of control, compared to controlling load devices connected at different points.

The compensating power supply unit of the load device may be capable of adjusting apparent power of the load device, and the load device may be configured to, when causing the compensating power supply unit to supply reactive power to the electric lines according to the supply information, limit the adjustment to the apparent power of the load device by the compensating power supply unit. This feature allows the load device to secure the reactive power to be supplied to the electric lines while allowing the load device to adjust its apparent power.

The load device may include the compensating power supply unit capable of supplying reactive power using a capacitor as a voltage source. This feature can prevent a reduction in life of the load device, compared to supplying reactive power using a secondary battery as a voltage source.

The acquisition unit may be configured to acquire electric line information relating to apparent power of the electric lines, and the control unit may be configured to control the supply of reactive power to the electric lines by the load device according to the electric line information. This feature improves the accuracy of power factor control, compared to controlling the supply of reactive power by the load device regardless of the electric line information.

The electric line information may include electric line information about an electric line of the electric lines, the electric line being branched off from a distribution line that is connected to the power generator via a point of common coupling at which the power generator is associated with an electric power system, the electric line leading to the point of common coupling. This feature enables controlling the power factor of the electric lines for each point of common coupling, improving the accuracy of the control.

The control unit may be configured to control the supply of reactive power to the electric lines by the load device according to a predetermined power factor for the electric lines and the supply information. This feature improves the accuracy of power factor control, compared to performing controlling regardless of the predetermined power factor.

The control unit may be configured to control the supply of reactive power to the electric lines by the power generator according to predetermined conditions for the load device. This feature improves the flexibility in power factor control, compared to when the control unit controls only the load device.

The control unit may be configured to control relationship between the supply of reactive power to the electric lines by the power generator and the supply of reactive power by the load device, based on predetermined conditions for a position of the load device and predetermined conditions for a position of the power generator. This feature improves the accuracy of power factor control, compared to performing control regardless of the positions of the power generator and the load device.

The acquisition unit may be configured to acquires loss information relating to loss of reactive power supplied by the load device in electric lines from the load device to the power generator, and the control unit may be configured to control the supply of reactive power by the load device to the electric lines according to the loss information. This feature improves the accuracy of power factor control, compared to performing control regardless of the loss information.

Viewed from another aspect, a load device according to the present disclosure includes: an acquisition unit configured to acquire supply information relating to supply of power to electric lines by a power generator for generating power and supplying the power to the electric lines; and a compensating power supply unit configured to supply reactive power to the electric lines according to the supply information acquired by the acquisition unit. This feature reduces the loss of power generation opportunities, compared to controlling the power factor of electric lines only through the supply of reactive power from the power generator to the electric lines.

Viewed from still another aspect, a control method according to the present disclosure includes steps of: acquiring supply information relating to supply of power to electric lines by a power generator for generating power and supplying the power to the electric lines; and controlling, according to the supply information, supply of reactive power to the electric lines by a load device including a compensating power supply unit capable of supplying reactive power to the electric lines. This feature reduces the loss of power generation opportunities, compared to controlling the power factor of electric lines only through the supply of reactive power from the power generator to the electric lines.

Viewed from still another aspect, an information processing device according to the present disclosure includes: a control unit configured to control an exchange of information with other devices. The control unit is configured to: acquire supply information relating to supply of power to electric lines by a power generator for generating power and supplying the power to the electric lines; and transmit command information to a load device including a compensating power supply unit capable of supplying reactive power to the electric lines, the command information commanding the load device to supply reactive power to the electric lines according to the supply information. This feature reduces the loss of power generation opportunities, compared to controlling the power factor of electric lines only through the supply of reactive power from the power generator to the electric lines.

Viewed from still another aspect, a load device according to the present disclosure includes: a receiving unit configured to receive command information, the command information commanding the load device to supply reactive power to electric lines based on supply information relating to supply of power to the electric lines by a power generator for generating power and supplying the power to the electric lines; and a compensating power supply unit configured to supply reactive power to the electric lines according to the command information received by the receiving unit. This feature reduces the loss of power generation opportunities, compared to controlling the power factor of electric lines only through the supply of reactive power from the power generator to the electric lines.

The load device may further include: a conversion unit configured to convert received power; and a heat pump unit configured to consume the power converted by the conversion unit to adjust temperature or humidity, and the compensating power supply unit may be configured to supply reactive power to a power receiving path for the conversion unit using a capacitor as a voltage source. This feature reduces the complexity of the load device.

Brief Description of the Drawings

> FIG. 1 illustrates an example entire configuration of an electrical supply system, including a power control system according to an exemplary embodiment.
> FIG. 2 illustrates an example hardware configuration of a control device and a management server according to the exemplary embodiment.
> FIG. 3 illustrates an example hardware configuration of a solar power generator.
> FIG. 4 illustrates an example hardware configuration of an air conditioner.
> FIG. 5 illustrates example functional configurations of the solar power generator, the air conditioner, the control device, and the management server according to the exemplary embodiment.
> FIG. 6 illustrates an example electric line management table.
> FIG. 7 illustrates an example device management table.
> FIG. 8 is a sequence diagram illustrating example operations of the solar power generator, the air conditioner, the control device, and the management server.
> FIG. 9 is a flowchart illustrating an example operation of the control device for calculating a required amount.
> FIG. 10 is a flowchart illustrating an example operation of the control device for determining responsible devices.

Description of Embodiments

An exemplary embodiment (hereinafter referred to as the "present embodiment") is described below with reference to the appended drawings.

[Electrical Supply System 1000]

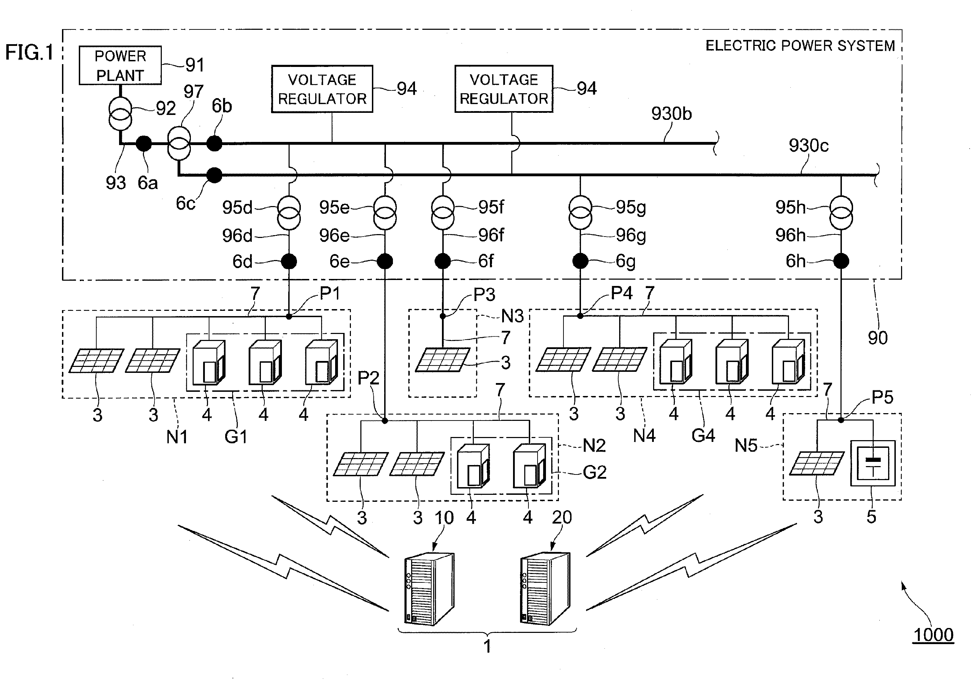

FIG. 1 illustrates an example entire configuration of an electrical supply system 1000, including a power control system 1 according to the present embodiment.

In the example in FIG. 1, the electrical supply system 1000 includes an electric power system 90 including a power plant 91, a group of devices N (N1, N2, N3, N4, N5), and the power control system 1.

(Electric power system 90)

The electric power system 90 includes the power plant 91 and generates power and supplies it to consumers. In the example in FIG. 1, the electric power system 90 includes the power plant 91, a supply-side substation 92, a transmission line 93, distribution lines 930 (930b, 930c), voltage regulators 94, reception-side transformers 95 (95d, 95e, 95f, 95g, 95h), service lines 96 (96d, 96e, 96f, 96g, 96h), and a distributing substation 97.

The side where the power plant 91 is located with respect to the distribution lines 930 may be referred to as the "supply side," and the side different from the supply side may be referred to as the "reception side."

The power plant 91 is a facility that generates power to be distributed in the electric power system 90. In this example, the power plant 91 generates more power than devices (described below) connected to the service lines 96. More specifically, the power plant 91 generates the most power among the facilities and devices connected to the transmission line 93, distribution lines 930, and service lines 96.

Examples of the power plant 91 include thermal plants, hydroelectric plants, wind plants, solar power plants, geothermal plants, nuclear plants, and pumped-storage plants.

The supply-side substation 92 converts the voltage from the power plant 91 and outputs the converted voltage. More specifically, the supply-side substation 92 includes one or more substations located on the supply side relative to the reception-side transformers 95, and converts the voltage applied by installed transformers and outputs the converted voltage. Examples of the transformers installed in the supply-side substation 92 include those that convert the voltage from the power plant 91 into a voltage of 275,000 to 500,000 V, that convert the voltage of 275,000 to 500,000 V into 154,000 V, that convert the voltage of 154,000 V into 66,000 V, and that convert the voltage of 66,000 V into 22,000 V.

The transmission line 93 is a line through which the current produced by the voltage applied from the supply-side substation 92 flows. The transmission line 93 is connected to the distributing substation 97. The distributing substation 97 converts, for example, the voltage of 22,000 V into 6,600 V. The distribution lines 930 are lines through which the current produced by the voltage applied from the distributing substation 97 flows. The current flows from the distributing substation 97 to the distribution lines 930. In the example in FIG. 1, the distributing substation 97 is connected to two distribution lines 930b, 930c.

Each voltage regulator (static var compressor (SVC) or STATCOM) 94 adjusts the voltage of the corresponding distribution line 930. More specifically, each voltage regulator 94 detects the voltage of the corresponding distribution line 930 and, if the detected voltage is not in a predetermined range, adjust the voltage to fall within the predetermined range.

In the example in FIG. 1, two voltage regulators 94 are provided corresponding to the two distribution lines 930b, 930c to adjust their respective voltages.

The distribution lines 930 are connected to the distribution substation 97 to allow the current from the distributing substation 97 to flow therethrough. In the example in FIG. 1, two distribution lines 930b, 930c are provided, and the current from the transmission line 93 flows into each of the distribution lines 930 via the distributing substation 97, which changes the voltage.

The distribution lines 930 are connected to multiple reception-side transformers 95, so that the current flows into each of the reception-side transformers 95. In the example in FIG. 1, the distribution line 930b is connected to reception-side transformers 95d, 95e, 95f, and the distribution line 930c is connected to reception-side transformers 95g, 95h.

The reception-side transformers 95 convert the voltage from the respective distribution lines 930 and output the converted voltage. More specifically, the reception-side transformers 95 include one or more transformers located on the reception side relative to the supply-side substation 92, and convert the applied voltage and output the converted voltage. Examples of the reception-side transformer 95 include a transformer that converts a voltage of 6600 V into 100 V or 200 V. The reception-side transformers 95 may be pole transformers, or may be power reception facilities that convert a voltage of 6600 V into 100 V or 200 V at the consumer side.

The service lines 96 are lines through which the current produced by the voltage applied from the respective reception-side transformer 95 flows. In the example in FIG. 1, service lines 96d, 96e, 96f, 96g, 96h are connected to the reception-side transformers 95d, 95e, 95f, 95g, 95h, respectively, and the current produced by the voltage applied from the respective reception-side transformers 95 flow into the respective service lines 96.

As described above, in the electric power system 90, power from the power plant 91 is converted by the supply-side substation 92 and branched off into each of the reception-side transformers 95 via the transmission line 93, the distributing substation 97, and the corresponding one of the distribution lines 930. The branched-off power is then converted by each of the reception-side transformers 95 and supplied to a corresponding one of the device groups N to which it is connected via the corresponding one of the service lines 96. In this way, the electric power system 90 distributes the power from the power plant 91 to the device groups N.

The transmission line 93, the distribution lines 930, and the service lines 96 are all examples of the electric lines according to the present embodiment. Hereafter, they may be referred to collectively as the "electric lines."

The transmission line 93, the distribution lines 930, and the service lines 96 are equipped with respective electric line sensors 6 (6a, 6b, 6c, 6d, 6e, 6f, 6g, 6h) to detect a parameter(s) related to apparent power of the respective electric lines. The apparent power-related parameters are those that affect the apparent power. Examples of the apparent power-related parameters include apparent power, real power, reactive power, current, voltage, power factor, as well as the amount of apparent power, the amount of real power, and the amount of reactive power in a predetermined period. The apparent power-related parameters are examples of the electric line information relating to the apparent power of the electric lines.

The electric line sensors 6 detect the apparent power-related parameter(s) at, for example, predetermined time intervals. The predetermined time interval is, for example but not limited to, 60 seconds. The electric line sensors 6 transmit the detected parameter(s) and electric line identification information for identifying the corresponding electric line to the control device 10 (described below).

The parameters detected by the electric line sensors 6 are not limited to one type of parameters. The electric line sensor 6 may detect more than one of the aforementioned types of parameters, and may transmit information including more than one types of parameters detected to the control device 10. The electric line sensors 6 may detect the same type of parameter, or the electric line sensors 6 may detect mutually different types of parameters.

(Device group N)

A device group N is a group of devices that is connected to the electric power system 90 via a common one of the service line 96. In other words, one or more devices belonging to a device group N are coupled to the electric power system 90 via a common one of the service lines 96. The example in FIG. 1 illustrates five device groups N1, N2, N3, N4, N5, to each of which solar power generators 3, air conditioners 4, and/ electric storage devices 5 belong. For example, two solar power generators 3 and three air conditioners 4 belong to the device group N1, and these devices are coupled to the electric power system 90 via the common service line 96d. In an implementation, each device group N may include only one device, such that only one solar power generator 3 belongs to the device group N3.

The devices in each of the device groups N may be owned by one consumer or by multiple consumers. Multiple devices belonging to different ones of the device groups N may be owned by one consumer.

Here, the point at which each of the device groups N is connected to the corresponding one of the service lines 96, namely the point at which the devices belonging to each of the device groups N are coupled to the electric power system 90 is referred to as a point of common coupling P. When distinctions are necessary between the points of common coupling P for the respective device groups N, each point of common coupling is denoted as a point of common coupling Pi, labeled with the same number i as the device group Ni. For example, the solar power generators 3 and the air conditioners 4 belonging to the device group N1 are coupled to the electric power system 90 at the point of common coupling P1.

In the example in FIG. 1, the devices in each of the device groups N is connected to the corresponding one of the service lines 96 through a device connection line 7, which branches off from the corresponding point of common coupling P. The point of common coupling P can also be viewed as the point at which the device connection line 7 in each of the device groups N connects to the corresponding one of the service lines 96.

The solar power generator 3 is a device that generates power by converting light energy, such as sunlight, into electrical energy. The solar power generator 3 according to the present embodiment generates less power than the power plant 91. The phrase "generating less power" means that the maximum power that the solar power generator 3 can generate per unit time is smaller than the maximum power that the power plant 91 can generate per unit time, and does not mean that the power generated by the solar power generator 3 is always smaller than the power generated by the power plant 91.

The solar power generator 3 can supply the generated power to the air conditioners 4 or electric storage devices 5 in the corresponding one of the device groups N via the device connection line 7. The solar power generator 3 can also supply the generated power to the electric lines via the device connection line 7. The solar power generator 3 according to the present embodiment is an example of a power generator that supplies generated power to the electric lines.

The solar power generator 3 according to the present embodiment transmits power generator information to the management server 20 (described below) at predetermined time intervals, where the power generator information includes device identification information for identifying itself, information indicating the condition of the power source, information indicating the power generated by the solar power generator 3, information indicating the real power supplied to the electric lines, information indicating the reactive power supplied to the electric lines, and supply capacity information indicating the magnitude of reactive power that can be supplied to the electric lines. The predetermined time interval is, for example but not limited to, 60 seconds.

The information indicating the condition of the power source, the information indicating the generated power, the information indicating the real power supplied to the electric lines, and the information indicating the reactive power supplied to the electric lines included in the power generator information are all examples of the supply information relating to the supply of power from the solar power generator 3 to the electric lines.

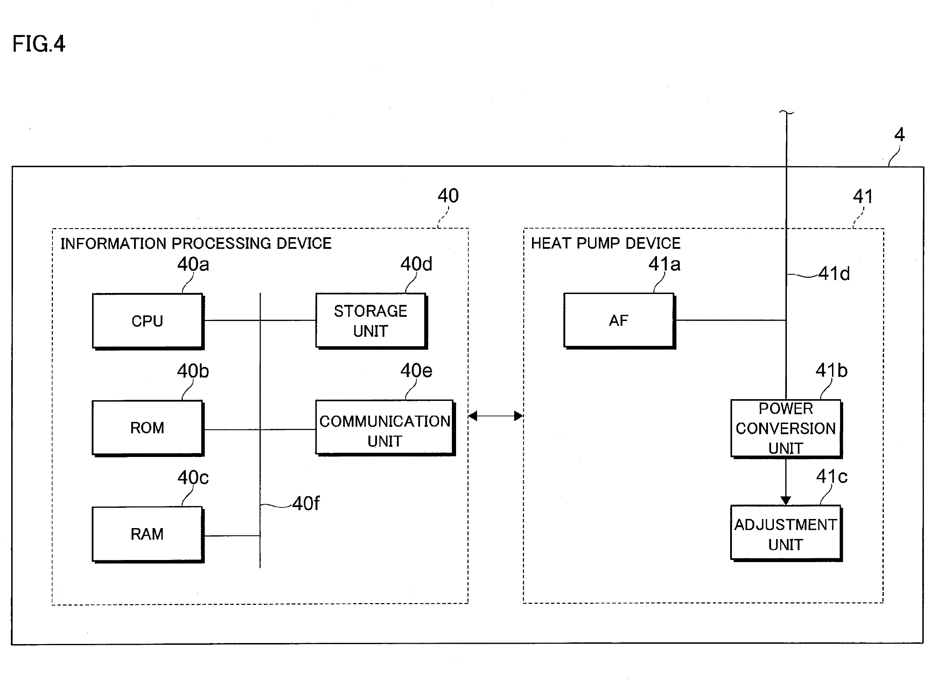

The air conditioner 4 is a device equipped with a heat pump unit (described below with reference to FIG. 4) that consumes the power received via the device connection line 7 to adjust temperature or humidity. The phrase "adjusting temperature or humidity" encompasses instances where the air conditioner 4 adjusts only one of temperature or humidity and where the air conditioner 4 adjusts both temperature and humidity.

The air conditioner 4 also supplies reactive power to the electric lines via the device connection line 7 in response to the command from the control device 10. The air conditioner 4 according to the present embodiment is an example of the load device including a compensating power supply unit capable of supplying reactive power to the electric lines.

The electric storage device 5 is a device that stores the power received via the device connection line 7 and supplies the stored power upon request from a user. The electric storage device 5 includes a secondary battery (storage battery) such as a lithium battery (not shown), and can supply power through charging and discharging of the secondary battery. Using the secondary battery as a compensating power supply unit and in response to the command from the control device 10, the electric storage device 5 supplies reactive power to the electric lines via the device connection line 7. The electric storage device 5 according to the present embodiment is an example of the load device including a compensating power supply unit.

The air conditioner 4 or the electric storage device 5 according to the present embodiment transmits load device information to the management server 20 (described below) at predetermine time intervals, where the load device information includes device identification information for identifying itself, information indicating the condition of the power source, information indicating the operating status, information indicating the reactive power being supplied to the electric lines, and information about the supply capacity. The predetermined time interval is, for example but not limited to, 60 seconds.

The load device information may at least include information that can be used to estimate or calculate the supply capacity of the air conditioner 4 or the electric storage device 5, and is thus not limited to the examples listed above.

A group G is a group of devices that belong to the same one of the device groups N and are equipped with a compensating power supply unit. When distinctions are necessary between multiple groups G, each group is denoted as a group Gi, labeled with the same number i as the device group Ni, like G1, G2, G4 in FIG. 1. For example, the group G1 consists of three air conditioners 4 that belong to the same device group N1 and are equipped with a compensating power supply unit.

While the example in FIG. 1 illustrates groups G each consisting only of air conditioners 4, each group G may include, or consist only of, electric storage devices 5.

(Power control system 1)

As shown in FIG. 1, the power control system 1 includes the control device 10 and the management server 20.

The power control system 1 according to the present embodiment controls the supply of reactive power to the electric lines from the compensating power supply units of the air conditioners 4 or electric storage devices 5, according to the information acquired from the solar power generators 3, the air conditioners 4, and the electric line sensors 6.

The control device 10 is an information processing device that provides commands to the air conditioners 4 or electric storage devices 5 about the supply of reactive power to the electric lines to thereby control the supply of reactive power from each device to the electric lines. In the present embodiment, the control device 10 obtains the power generator information about the solar power generators 3 via the management server 20, and obtains the apparent power-related parameters and the electric line identification information from the electric line sensors 6. Based on the obtained information, the control device 10 determines whether it is necessary to supply reactive power to the electric lines, and upon determining that the reactive power supply is necessary, the controller 90 commands the devices connected to the electric power system 90 to supply reactive power.

The management server 20 is an information processing device that manages the power generator information received from the solar power generators 3 and the load device information received from the air conditioners 4 or electric storage devices 5, and transmits the information it manages in response to the request from the control device 10.

In addition, in response to the control device 10 commanding the air conditioners 4 or electric storage devices 5 to supply reactive power, the management server 20 according to the present embodiment manages the content of the command as a control history.

The control device 10 and the management server 20 are implemented by computers, for example. The control device 10 and the management server 20 may each be configured with a single computer, or may be implemented by distributed processing by multiple computers. Alternatively, the control device 10 and the management server 20 may be implemented on virtual hardware provided by cloud computing.

In the present embodiment, the control device 10 and the management server 20 are implemented as separated devices. However, the control device 10 and the management server 20 may be implemented as a single device.

In the present embodiment, the control device 10, the management server 20, the electric line sensors 6, the solar power generators 3, and the air conditioners 4 are connected via a network (not shown). The management server 20, the solar power generators 3, and the air conditioners 4 are also connected via a network. The network for connection between the devices may be any network that enables an exchange of information, such as wired communication, wireless communication, or power line communication (PLC). The devices may be connected via multiple networks, communication lines, relay devices, etc.

When the power generated by the solar power generators 3 is small, the voltage rise in the electric lines will be small even if substantially all of the generated power is supplied as real power to the electric lines and the power factor approaches 100%. When, conversely, the power generated by the solar power generators 3 is large, the voltage rise in the electric lines will be large if substantially all of the generated power is supplied as real power to the electric lines and the power factor approaches 100%. Thus, at least when the power generated by the solar power generators 3 is large, it is necessary to control the power factor of the electric lines to inhibit the voltage rise.

The power control system 1 according to the present embodiment controls the supply of reactive power from the solar power generators 3, air conditioners 4, and electric storage device 5 to the electric lines based on the power generator information from the solar power generators 3. The power control system 1 thus controls the power factor of the electric lines, using the reactive power supplied by each device.

[Device Hardware Configurations]

(Control device 10 and management server 20)

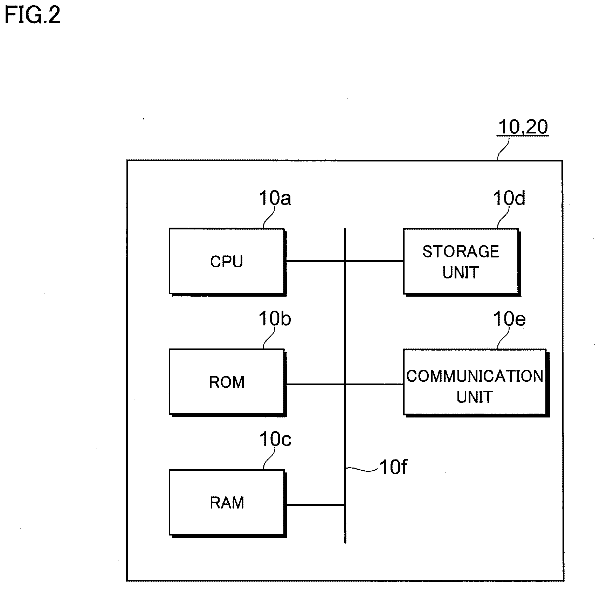

FIG. 2 illustrates an example hardware configuration of the control device 10 and the management server 20 according to the present embodiment.

In the present embodiment, the same figure is used to describe the control device 10 and the management server 20 as having the same hardware configuration. However, the control device 10 and the management server 20 may have different hardware configurations.

As shown in the figure, the control device 10 and the management server 20 include a central processing unit (CPU) 10a, a read-only memory (ROM) 10b, a random access memory (RAM) 10c, a storage unit 10d, and a communication unit 10e (communication interface). In addition, the control device 10 and the management server 20 may also include input units such as a keyboard and a mouse for entering information and a display unit such as a liquid crystal display. These functional components are connected to a bus 10f and exchange data via the bus 10f.

The ROM 10b and the storage unit 10d store programs to be executed by the CPU 10a. The CPU 10a reads the programs stored on the ROM 10b and the storage unit 10d and executes them using the RAM 10c as a working area.

In the present embodiment, various functions of the control device 10 and the management server 20 are implemented as the CPU 10a executes the programs stored on the ROM 10b and the storage unit 10d.

(Solar power generator 3)

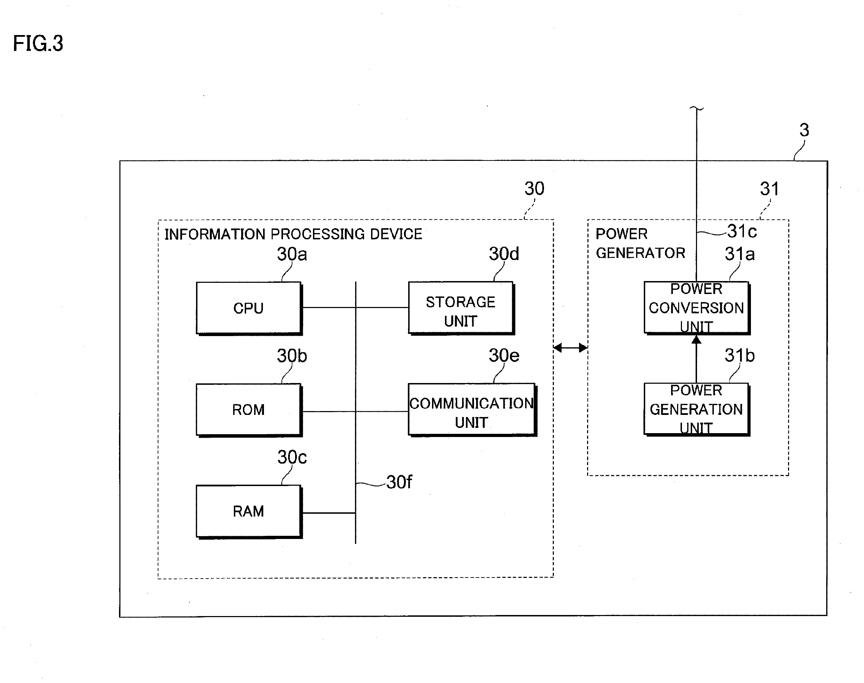

FIG. 3 illustrates an example hardware configuration of the solar power generator 3.

The solar power generator 3 according to the present embodiment is configured with an information processing device 30 and a power generator 31.

As shown in the figure, the information processing device 30 includes a CPU 30a, a ROM 30b, a RAM 30c, a storage unit 30d, and a communication unit 30e (communication interface). These functional components are connected to a bus 30f. The hardware configuration of the information processing device 30 is similar to that of the control device 10 and the management server 20 (see FIG. 2) described above. Accordingly, these similar functional components are identified by the same names, and detailed descriptions thereof are omitted.

The power generator 31 includes a power conversion unit 31a, a power generation unit 31b, and a power supply path 31c connected to the device connection line 7 (see FIG. 1).

The power generation unit 31b is a functional component including a so-called solar panel and a junction box. The power generation unit 31b converts the received light energy into DC electric power and stores it. The power conversion unit 31a is a so-called power conditioner, which converts the DC power stored by the power generation unit 31b into AC power and supplies it to the power supply path 31c. The power supplied to the power supply path 31c is supplied to the air conditioners 4 or electric storage devices 5 in the corresponding one of the device groups N via the corresponding device connection line 7. The power supplied to the power supply path 31c is also supplied to the electric lines via the corresponding device connection line 7.

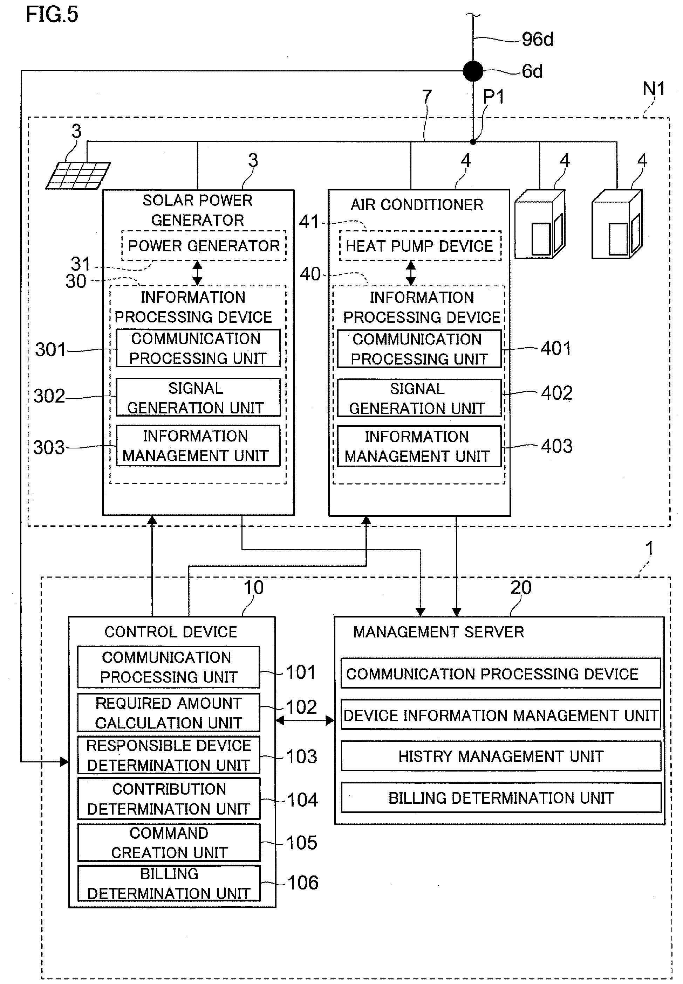

In response to a control signal (described below with reference to FIG. 5) from the information processing device 30, the power conversion unit 31a can output reactive power along with the real power, which is the AC power converted from the DC power generated by the power generation unit 31b. More specifically, the power conversion unit 31a can output reactive power of the magnitude corresponding to the control signal from the information processing device 30. There is an upper limit to the amount of power that can be taken by the power conversion unit 31a, depending on the capacity of the power conversion unit 31a. Hence, the power conversion unit 31a limits the conversion and output of real power so that the taken power does not exceed the upper limit, while ensuring the output of reactive power of the magnitude corresponding to the control signal. As such, the supply of real power to the electric lines by the solar power generator 3 according to the present embodiment is limited when it supplies reactive power to the electric lines.

(Air conditioner 4)

FIG. 4 illustrates an example hardware configuration of the air conditioner 4.

The air conditioner 4 according to the present embodiment is configured with an information processing device 40 and a heat pump device 41.

As shown in the figure, the information processing device 40 includes a CPU 40a, a ROM 40b, a RAM 40c, a storage unit 40d, and a communication unit 40e (communication interface). These functional components are connected to a bus 40f. The hardware configuration of the information processing device 40 is similar to that of the control device 10 and the management server 20 (see FIG. 2) described above. Accordingly, these similar functional components are identified by the same names, and detailed descriptions thereof are omitted.

The heat pump device 41 includes an active filter (AF) 41a, which is an example of the compensating power supply unit, a power conversion unit 41b, which is an example of the conversion unit, an adjustment unit 41c, which is an example of the heat pump unit, and a power receiving path 41d connected to the corresponding device connection line 7 (see FIG. 1).

The adjustment unit 41c adjusts the temperature or humidity of the environmental air. The adjustment unit 41c includes a compressor (not shown) with an integrated motor operative by the received power and includes a heat exchanger (not shown). The motor integrated in the compressor transmits rotational motion to the compression section, which compresses the refrigerant. The refrigerant compressed to raise its pressure and temperature and thus liquefied is sent to the heat exchanger, which radiates heat to the outside air. This adjusts the temperature or humidity of the environmental air.

The power conversion unit 41b includes an inverter (not shown) and a converter (not shown). The power conversion unit 41b uses the inverter and the converter to convert the power received via the power receiving path 41d into power of a specific voltage and frequency. The specific voltage and frequency are the voltage and frequency required to operate the motor integrated in the compressor of the adjustment unit 41c. The power conversion unit 41B supplies the converted power to the adjustment unit 41C to operate the adjustment unit 41C.

The AF 41a is connected to the power receiving path 41d in electrically parallel with the power conversion unit 41b, and supplies power to the power receiving path 41d to adjust the apparent power of the power receiving path 41d. Thus, the AF 41a can adjust the apparent power of its own device. The AF 41a also supplies reactive power to the electric lines in response to a control signal (described below with reference to FIG. 5) from the information processing device 40. The AF 41a is an example of the compensating power supply unit according to the present embodiment. When supplying reactive power to the electric lines, the AF 41a according to the present embodiment may limit the adjustment to the apparent power of its own device to secure the reactive power to be supplied to the electric lines.

The AF 41a also includes a circuit (not shown) configured with a capacitor as a voltage source. This capacitor and circuit have capacitance and are capable of supplying reactive power through charging and discharging.

In the present embodiment, the CPU 40a of the information processing device 40 is described as being used to execute various arithmetic processes in the air conditioner 4. However, in other embodiments, the AF 41a of the heat pump device 41 may include a CPU as a functional component, and various arithmetic processes may be executed by this CPU.

The programs to be executed by the CPUs 10a, 30a, 40a (see FIGS. 2 through 4) are provided to each device in the form of a computer-readable recording medium such as magnetic recording media (magnetic tape, magnetic disks, etc.), optical recording media (optical disks, etc.), magnetooptical recording media, or semiconductor memory. The programs to be executed may also be provided to each device via communication means such as the Internet.

[Device Functional Configurations]

FIG. 5 illustrates example functional configurations of the solar power generator 3, the air conditioner 4, the control device 10, and the management server 20.

For the sake of illustration, FIG. 5 shows, in addition to the power control system 1 and each device belonging to the device group N1, the service line 96d for power distribution to the device group N1 and the electric line sensor 6d attached to the service line 96d.

(Control device 10)

The control device 10 includes a communication processing unit 101, a required amount calculation unit 102, a responsible device determination unit 103, a contribution determination unit 104, a command creation unit 105, and a billing determination unit 106.

The communication processing unit 101 exchanges information with other devices via the communication unit 10e (see FIG. 2). The communication processing unit 101, which is an example of the acquisition unit, requests and obtains the power generator information about the solar power generators 3 from the management server 20. The communication processing unit 101 also requests and obtains the load device information about the air conditioners 4 or electric storage devices 5 from the management server 20. The communication processing unit 101 also obtains the apparent power-related parameters of the relevant electric lines and the electric line identification information from the electric line sensors 6. While the example in FIG. 5 illustrates obtaining the information about the service line 96d from the electric line sensor 6d, the communication processing unit 101 according to the present embodiment is capable of obtaining information from all electric line sensors 6 on the electric power system 90.

In addition, the communication processing unit 101 transmits the command information created by the command creation unit 105 to each destination device. The communication processing unit 101 also transmits, to the management server 20, the command information created by the command creation unit 105 and the information obtained from the corresponding electric line sensor 6 for creation of the command.

The required amount calculation unit 102 determines whether it is necessary to supply reactive power to an electric line and, if so, calculates the magnitude of reactive power that needs to be supplied (which may be referred to as the "required amount"). More specifically, the required amount calculation unit 102 manages information obtained from the electric line sensors 6, and determines whether it is necessary to supply reactive power to any of the relevant electric lines based on the information it manages and the power generator information about the solar power generators 3 obtained from the management server 20. Upon determining that the supply of reactive power is necessary, the required amount calculation unit 102 calculates the required amount based on the information it manages and the power generator information.

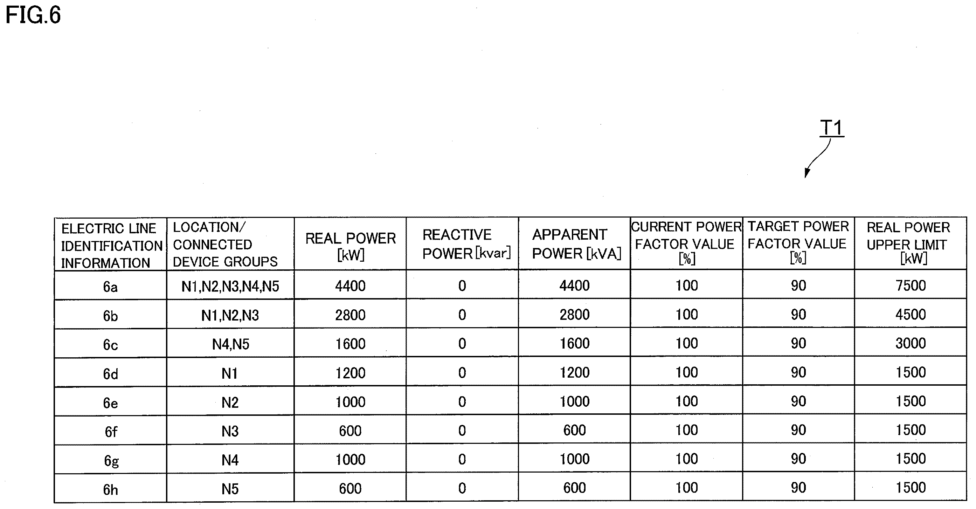

Referring now to FIG. 6, the information managed by the required amount calculation unit 102 is detailed. The example discussed here is where the required amount calculation unit 102 obtains current values of real power, reactive power, apparent power, and power factor of the relevant electric lines from the electric line sensors 6 as the apparent power-related parameters.

FIG. 6 illustrates an example electric line management table T1.

The required amount calculation unit 102 according to the present embodiment establishes links between pre-registered information relating to the electric lines and the information obtained from the electric line sensors 6 for each electric line using the electric line identification information, and manages them in the electric line management table T1. In FIG. 6, reference numerals of the electric line sensors 6 (6a, 6b, 6c, 6d, 6e, 6f, 6g, 6h) attached to the respective electric lines are listed as examples of the electric line identification information, as shown in the first column "Electric line identification information" of the electric line management table T1.

The following information is pre-registered with the required amount calculation unit 102 according to the present embodiment as the information relating to the electric lines: the electric line identification information, electric line location information, target power factor values of the electric lines, upper limits of the real power supplied to the electric lines, upper limits of the reactive power supplied to the electric lines, and upper limits of the current supplied to the electric lines.

The information relating to the electric lines to be registered may be, for example, directly entered into the control device 10. In one alternative example, the information to be registered may be obtained from communication with a computer system or the like used by the administrator of the electric power system 90.

The electric line location information indicates the location of each relevant electric line in the electric power system 90. In the present embodiment, as shown in FIG. 6 in the second column "Location/connected device groups," of the electric line management table T1, information indicating which device group(s) N on the reception side is connected to the relevant electric line is used as the electric line location information. For example, the transmission line 93 (see FIG. 1) indicated by the electric line identification information "6a" is identified as the electric line connected to the device groups N1, N2, N3, N4, N5 on the reception side. The distribution line 930b indicated by the electric line identification information "6b" is identified as the electric line connected to the device groups N1, N2, N3 on the reception side, and the service line 96d indicated by the electric line identification information "6d" is identified as the electric line connected to the device group N1 on the reception side. The electric line location information may be any information that indicates the location of the relevant electric line, and different information from the above may be used. For example, map data of the electric power system 90 may be registered with the control device 10, and the coordinates of each electric line or the electric line sensor 6 attached thereto in this map data may be used as the electric line location information. In one alternative example, the connectivity among the electric lines may be used as the electric line location information, such as the transmission line 93 is connected to the distribution lines 930b, 930c via the distributing substation 97, the distribution line 930b is connected to the service lines 96d, 96e, 96f, etc.

The target power factor value is a target value for power factor control that is predetermined for each electric line by the administrator of the electric power system 90 (power supplier). The target power factor value is an example of the power factor predetermined for the electric lines.

In the example in FIG. 6, the target power factor value for all electric lines is uniformly set to 90%, as shown in the seventh column "Target power factor value [%]" of the electric line management table T1. However, different values may be set for the respective electric lines.

The real power upper limit is an upper limit of the real power to be supplied, which is predetermined for each electric line by, for example, the administrator of the electric power system 90 (power supplier). The real power upper limit is, for example, determined from the correspondence between the real power supply to the relevant electric line and the voltage rise. More specifically, the real power upper limit is defined as a value the exceeding of which by the supplied real power causes a problem due to voltage rise or causes unacceptable effects from the voltage rise.

In the example in FIG. 6, the upper limit is set from 1500 to 7500 kW for each electric line, as shown in the eighth column "Real power upper limit [kW]" of the electric line management table T1. However, the same or different values may be set for all electric lines.

Similarly to the real power upper limit, the reactive power upper limit and the current upper limit are upper limits of the reactive power and current to be supplied, which are predetermined for each electric line by the administrator or others.

From the relationship between the power factor, real power and reactive power, the reactive power upper limit can be determined according to the target power factor value and the real power upper limit for the electric line. Thus, the reactive power upper limit may be calculated by the control device 10 based on the pre-registered real power upper limit and power factor target value. Conversely, the control device 10 may calculate the real power upper limit based on the pre-registered reactive power upper limit and power factor target value.

Also, the apparent power upper limit can be determined from the relationship between the apparent power, real power, and reactive power. Then, the upper limit of the current can be determined by dividing this apparent power upper limit by the voltage of the electric line. Thus, the upper limit of the current may be calculated by the control device 10 based on the real power upper limit, the reactive power upper limit, and the voltage of the electric line.

In the example in FIG. 6, the apparent power-related parameters of the relevant electric lines, which are included in the information obtained from the electric line sensors 6, are managed in the third through sixth columns of the electric line management table T1. More specifically, the third column "Real power [kW]" corresponds to the magnitude of real power supplied to each electric line, the fourth column "Reactive power [kvar]" corresponds to the magnitude of reactive power supplied to each electric line, the fifth column "Apparent power [kVA]" corresponds to the magnitude of apparent power supplied to each electric line, and the sixth column "Current power factor [%]" corresponds to the current value of the power factor of each electric line.

In this manner, the required amount calculation unit 102 according to the present embodiment uses the electric line management table T1 to manage the pre-registered information relating to the electric lines and the information obtained from the electric line sensors 6, on an electric line-by-electric line basis.

The required amount calculation by the required amount calculation unit 102 is now described.

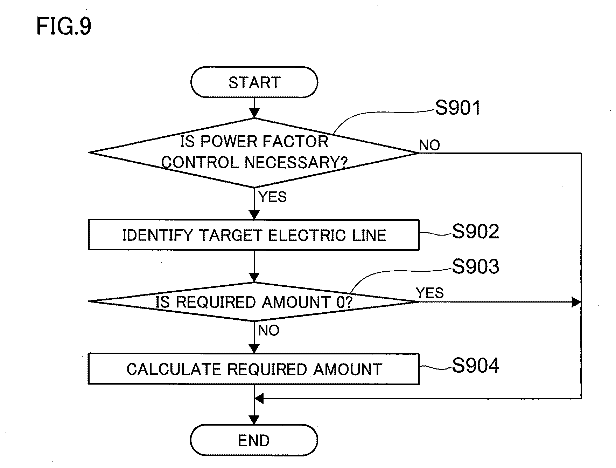

While details are presented below with reference to FIG. 9, the required amount calculation unit 102 according to the present embodiment determines whether it is necessary to control the power factor of an electric line based on the power generator information obtained from the management server 20, and upon determining that the power factor control is necessary, then determines whether the required amount is zero or not. Upon determining that the required amount is not zero (the supply of reactive power is necessary), the required amount calculation unit 102 calculates the required amount based on the following Equation 1. In Equation 1, the target power factor value of the electric line subject to power factor control (which may be referred to hereinafter as the "target electric line") is represented by F[-], the real power supplied to the target electric line is represented by P[W], and the reactive power supplied to the target electric line is represented by Q[var]. If Equation 1 holds true, the power factor of the electric line satisfies the target value F.

[Math.]

$$Q = \sqrt{\frac{1 - F^2}{F^2} \times P} \qquad \cdots (1)$$

The responsible device determination unit 103 determines a device(s) responsible for supplying reactive power to an electric line. More specifically, the responsible device determination unit 103 identifies the reactive power supply capacity of each device connected to the electric power system 90 based on the load device information and the power generator information. Then, based on the identified supply capacity, the responsible device determination unit 103 identifies which of the devices should be responsible for supplying reactive power to secure the required amount calculated by the required amount calculation unit 102, thereby determining the devices responsible for supplying reactive power. Hereinafter, the device determined to be responsible for supplying reactive power may be referred to as a "responsible device."

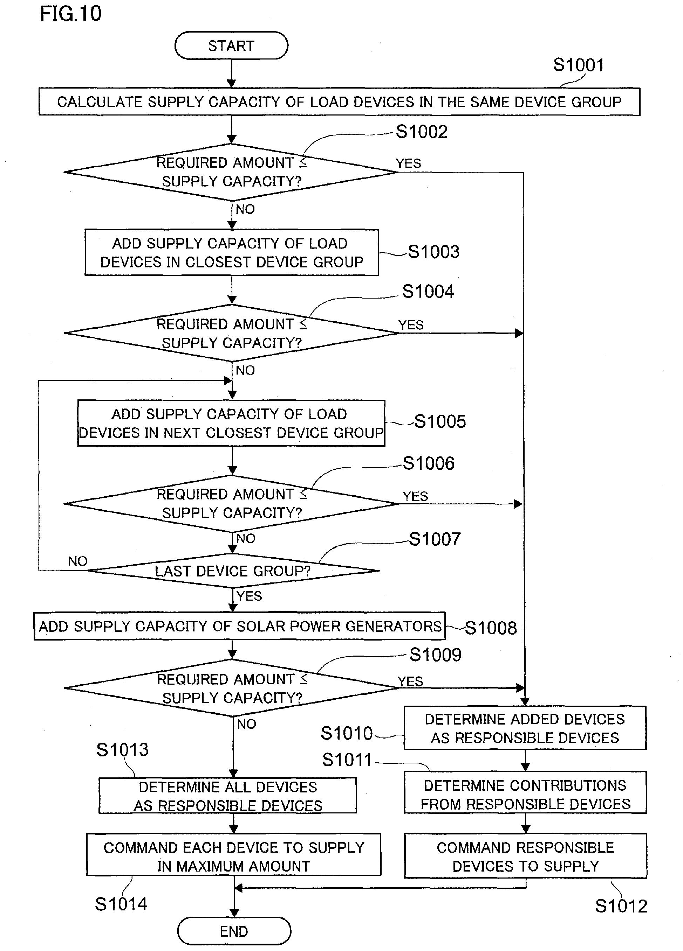

While details are presented below with reference to FIG. 10, the responsible device determination unit 103 according to the present embodiment determines responsible devices by considering all of the solar power generators 3, air conditioners 4, and electric storage device 5 connected to the electric power system 90 as candidates. **In** this case, the responsible device determination unit 103 determines responsible devices according to conditions predetermined for the load devices such as the air conditioners 4 and electric storage devices 5.

The contribution determination unit 104 determines contributions from the responsible devices to the supply of reactive power. More specifically, the contribution determination unit 104 determines the magnitude of reactive power to be supplied from each responsible device determined by the responsible device determination unit 103.

Details of the contribution determination made by the contribution determination unit 104 will be provided below.

The command creation unit 105 creates command information commanding the supply of reactive power to the electric line. More specifically, the command creation unit 105 creates command information for each responsible device determined by the responsible device determination unit 103, commanding it to supply reactive power of the magnitude determined by the contribution determination unit 104, and causes the communication processing unit 101 to transmit the information to each responsible device.

The billing determination unit 106 determines the billing for the supply of reactive power from each device to the electric line. For example, the billing determination unit 106 determines the billing destination for the supply of reactive power based on e.g., location of the electric line to which the reactive power was supplied and information about the consumer who own the devices connected to the electric line. In response to the command from the control device 10, for example, the billing determination unit 106 also determines the billing amount charged to each billing destination based on e.g., the magnitude of reactive power supplied from each device to the electric line and the number of times the reactive power was supplied.

If the processing associated with billing is unnecessary, the billing determination unit 106 may be eliminated.

(Management server 20)

The management server 20 includes a communication processing unit 201, a device information management unit 202, a history management unit 203, and a billing determination unit 204.

The communication processing unit 201 exchanges information with other devices via the communication unit 10e (see FIG. 2). The communication processing unit 201 receives the power generator information from the solar power generators 3 and the load device information from the air conditioners 4 or electric storage devices 5, and has the device information management unit 202 manage the above information. **In** response to the request from the control device 10, the communication processing unit 201 also transmits the information managed by the device information management unit 202, such as the power generator information and the load device information. The communication processing unit 201 also receives the command information and other information from the control device 10.

In addition, in response to the request from the administrator of the electric power system 90 or others, the communication processing unit 101 may also transmit history information (described below) managed by the history management unit 203 to a terminal of the administrator or other terminals.

The device information management unit 202 manages the power generator information received from the solar power generators 3 and the load device information received from the air conditioners 4 or electric storage devices 5, as information about the devices connected to the electric power system 90 (which may be referred to hereinafter as "device information"). More specifically, the device information management unit 202 manages the power generator information and load device information on a device-by-device basis, retrieves the information in response to the request from the control device 10, and has it transmitted by the communication processing unit 201.

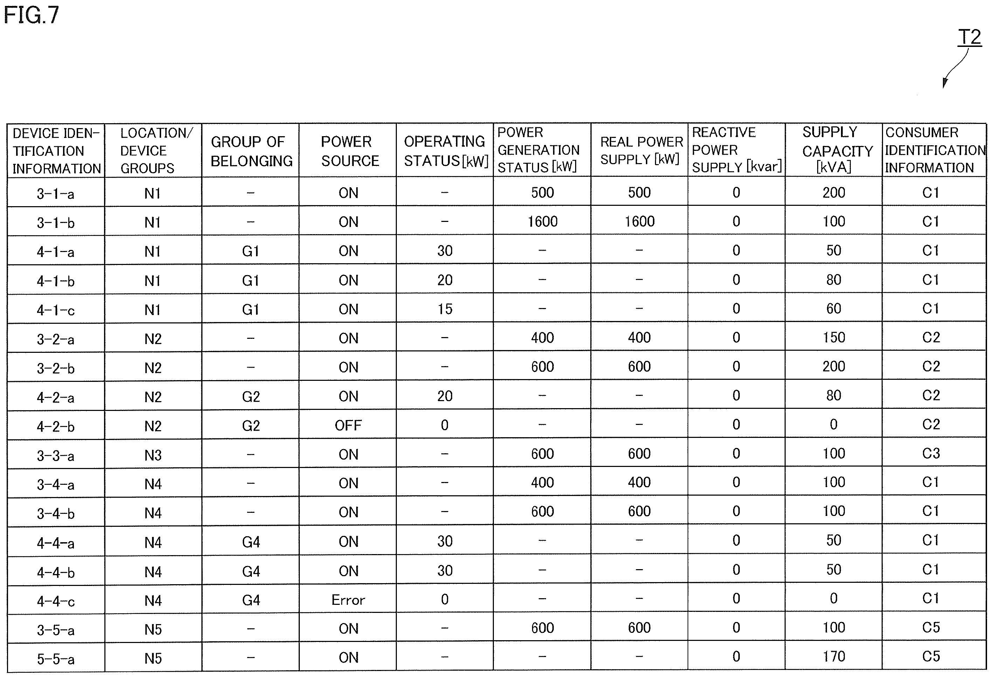

Referring to FIG. 7, the device information managed by the device information management unit 202 is detailed.

FIG. 7 illustrates an example device management table T2.

Information relating to the devices connected to the electric power system 90 is pre-registered, on a device-by-device basis, with the device information management unit 202 according to the present embodiment. The device information management unit 202 establishes links between the pre-registered information and the received power generator information and load device information using the device identification information, and manages them in the device management table T2. In FIG. 7, character strings h-i-j consisting of reference numerals h of the devices (= 3, 4, 5), numbers i of the device groups Ni (= 1, 2, 3, 4, 5) to which the respective devices belong, and alphabets j (= a, b, c) are listed as examples of the device identification information, as shown in the first column "Device identification information" of the device management table T2.

As the information relating to the devices connected to the electric power system 90, the device identification information, device location information, information about the group G to which the respective devices belong, and consumer identification information are pre-registered with the device information management unit 202 according to the present embodiment.

The device location information is information indicating the location of each device in the electric power system 90. In the present embodiment, as shown in FIG. 7 in the second column "Location/device group" of the device management table T2, information about each of the device groups N to which each device belongs is used as the location information about that device. The device location information may be any information that indicates the location of each relevant device, and different information from the above may be used. For example, map data of the electric power system 90 may be registered with the control device 10, and the coordinates of each device in this map data may be used as the device location information. In another example, information about each of the service lines 96 to which each device is connected or information about the point of common coupling P may be used as the device location information.

The consumer identification information is information for identifying each consumer who owns the device(s). In the example in FIG. 7, five consumers are identified by numbers C1, C2, C3, C4, C5, as shown in the tenth column "Consumer identification information" of the device identification table T2.

Information retrieved from the power generator information or load device information for each device is managed in the fourth through ninth columns of the device management table T2.

The fourth column "Power source" of the device management table T2 corresponds to information indicating the condition of the power source for each device. Powered-on devices are managed as being "ON," and powered-off devices are managed as being "OFF." When the power generator information or load device information cannot be obtained from the relevant device, or when the information indicating the condition of the power source obtained indicates that the relevant device is out of order, such a device is managed as having "Error," which indicates that the device is in a fault condition. When a device is pre-registered as being in a fault condition, that device is also managed as having "Error."

The fifth column "Operating status [kW]" of the device management table T2 corresponds to information indicating the operating status, which is included in the load device information. In the example in FIG. 7, the magnitude of real power that each air conditioner 4 received from the electric line and consumed and the magnitude of real power that each electric storage device 5 received from the electric line and stored are used as the information indicating the operating status.

The sixth column "Power generation status [kW]" of the device management table T2 corresponds to information indicating the power generated by each solar power generator 3, which is included in the power generator information. The seventh column "Real power supply [kW]" of the device management table T2 corresponds to information indicating the real power generated and supplied by each solar power generator 3 to the electric line, which is included in the power generator information.

The eighth column "Reactive power supply [kvar]" of the device management table T2 corresponds to information indicating the reactive power supplied by each device to the electric line, which is included in the power generator information or load device information. In the example in FIG. 7, none of the devices are supplying reactive power, so that the column "Reactive power supply [kW var]" is all zeroes.

The ninth column "Supply capacity [kVA]" of the device management table T2 corresponds to supply capacity information about each device, which is included in the power generator information or load device information. While in the present embodiment, the supply capacity information is described as being obtained from each device, it may be calculated or estimated by the control device 10 or management server 20 based on information such as the operating status of each device and the capacity of each device.

In this manner, the device information management unit 202 according to the present embodiment uses the device management table T2 to manage the pre-registered information relating to the devices and the information obtained from the devices, on a device-by-device basis.

The history management unit 203 manages the command information received from the control device 10 as a control history relating to the reactive power supply. More specifically, the history management unit 203 receives, from the control device 10, the command information and the information that the control device 10 obtained from the relevant electric line sensor 6 before and after the issuance of the command, and manages them as a control history.

The control device 10 may have a similar history management unit to manage the control history. When the history management is unnecessary, the history management unit 203 may be eliminated.

The billing determination unit 204 determines the billing to each consumer in the electric power system 90. For example, the billing determination unit 204 determines, for each device connected to the electric power system 90 and registered with the management server 20, the billing amount to be charged to each consumer who owns the device(s), based on the status of power reception and other factors.

If the processing associated with billing is unnecessary, the billing determination unit 204 may be eliminated.

(Solar power generator 3)

The solar power generator 3 includes a communication processing unit 301, a signal generation unit 302, and an information management unit 303, which are functional blocks implemented by the information processing device 30.

The communication processing unit 301 exchanges information with other devices via the communication unit 30e (see FIG. 3). The communication processing unit 301 transmits the power generator information about its own device, which is managed by the information management unit 303, to the management server 20. The communication processing unit 301 also receives command information from the control device 10.

The signal generation unit 302 generates a control signal for the power generator 31 based on the command information received from the control device 10. More specifically, the signal generation unit 302 generates a control signal to control the power generator 31 to supply reactive power of the magnitude specified by the command information to the power supply path 31c, and transmits the signal to the power generator 31.

The information management unit 303 manages information relating to its own device. More specifically, the information management unit 303 manages the device identification information, information indicating the condition of the power source, information indicating the power generated by its own device, information indicating the real power to be supplied to the electric lines, information indicating the reactive power being supplied to the electric lines, and information about the supply capacity. The information management unit 303 transmits these information items to the management server 20 as the power generator information at predetermined time intervals.

Of the information items managed by the information management unit 303, those that change over time, such as information indicating the condition of the power source, information indicating the power generated by its own device, information indicating the real power to be supplied to the electric lines, information indicating the reactive power being supplied to the electric lines, and information about the supply capacity, are updated at predetermined update time intervals. The predetermined update time interval is preferably shorter than the predetermined time interval for transmitting the power generator information to the management server 20, and is 10 seconds, for example.

(Air conditioner 4)

The air conditioner 4 includes a communication processing unit 401, a signal generation unit 402, and an information management unit 403, which are functional blocks implemented by the information processing device 40.

The communication processing unit 401 exchanges information with other devices via the communication unit 40e (see FIG. 4). The communication processing unit 401 transmits the load device information about its own device, which is managed by the information management unit 403, to the management server 20.

The communication processing unit 401 also receives command information from the control device 10.

The signal generation unit 402 generates a control signal for the heat pump device 41 based on the command information received from the control device 10. More specifically, the signal generation unit 402 generates a control signal to control the heat pump device 41 to supply reactive power of the magnitude specified by the command information to the power receiving path 41d from the AF 41a, and transmits the signal to the heat pump device 41.

The information management unit 403 manages information relating to its own device. More specifically, the information management unit 403 manages the device identification information, information indicating the condition of the power source, information indicating the operating status, information indicating the reactive power being supplied to the electric lines, and information about the supply capacity. The information management unit 403 transmits these information items to the management server 20 as the load device information at predetermined time intervals.

Of the information items managed by the information management unit 403, those that change over time, such as information indicating the condition of the power source, information indicating the operating status, information indicating the reactive power being supplied to the electric lines, and information about the supply capacity, are updated at predetermined update time intervals. The predetermined update time interval is preferably shorter than the predetermined time interval for transmitting the device information to the management server 20, and is 10 seconds, for example.

While FIG. 5 illustrates the functional blocks of the air conditioner 4, the electric storage device 5 and other load devices equipped with a compensating power supply unit (these may be referred to hereinafter as "load devices such as the electric storage devices 5") have a similar functional blocks relating to the reactive power supply, which includes a communication processing unit, a signal generation unit, and an information management unit. The load devices such as the electric storage devices 5 manage the load device information and transmit it to the management server 20, and receive command information from the control device 10 and generate control signals based on it.

(Control of reactive power supply)

[Operations of Devices]

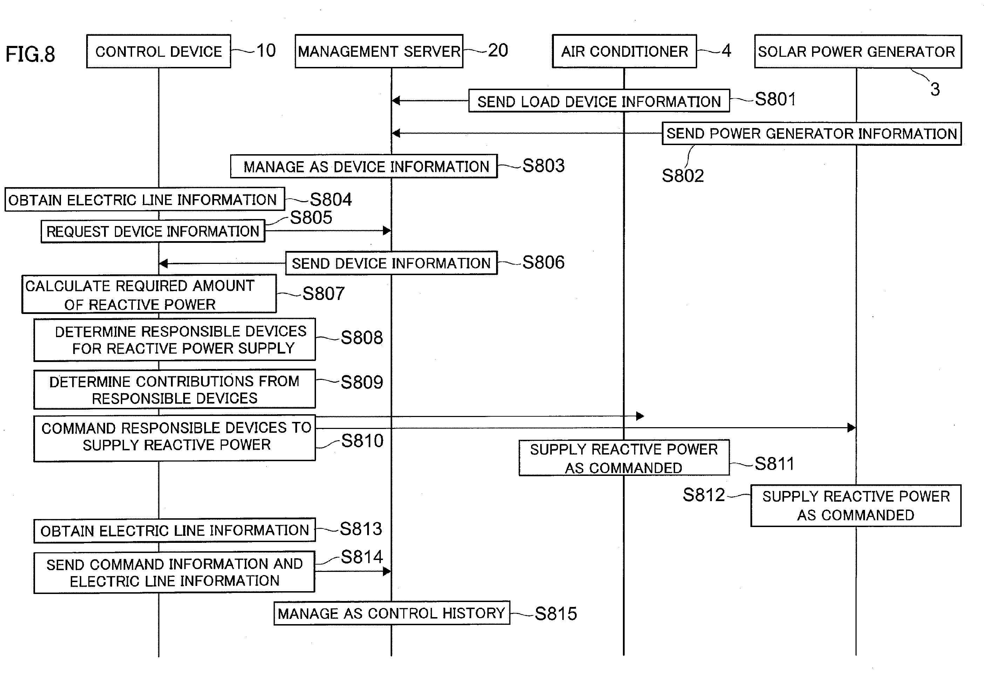

Referring now to FIG. 8, operations of the solar power generator 3, the air conditioner 4, the control device 10, and the management server 20 are described.

FIG. 8 is a sequence diagram illustrating example operations of the solar power generator 3, the air conditioner 4, the control device 10, and the management server 20.

The following description primarily describes operations relating to the control of reactive power supply to an electric line. Since the operations of the electric storage device 5 (see FIG. 1) relating to the reactive power supply to the electric line are similar to those of the air conditioner 4, only the air conditioner 4 is illustrated in the figure. While the figure illustrates one solar power generator 3 and one air conditioner 4, all devices connected to the electric power system 90 perform the same operations.

The air conditioner 4 transmits the load device information to the management server 20 at predetermined time intervals (S801). The solar power generator 3 transmits the power generator information to the management server 20 at predetermined time intervals (S802).

The management server 20 manages the received load device information and power generator information as the device information (S803). More specifically, the management server 20 updates and manages the device management table T2.

The control device 10 obtains electric line information from each electric line sensor 6 at predetermined time intervals (S804). After obtaining the electric line information, the control device 10 requests the device information from the management server 20 (S805).

In response to the request from the control device 10, the management server 20 transmits the latest device information (S806). More specifically, the management server 20 transmits the information it manages in the device management table T2 as the device information.

The control device 10 calculates the required amount of reactive power (S807). More specifically, the control device 10 determines whether it is necessary to control the power factor of any electric line based on the power generator information. Upon determining that control of the power factor of any electric line is necessary, the control device 10 determines whether the required amount is zero or not based on the power generator information and the electric line information. Upon determining that the required amount is not zero, the control device 10 calculates the required amount based on the power generator information and the electric line information.

If the control device 10 determines that no power factor control is necessary for the electric lines or determines that control of the power factor is necessary but the required amount is zero, the operations related to the control of reactive power supply to electric lines are terminated, and the sequence returns to S801.

The operations of S801 through S806 are not limited to the illustrated order; the control device 10 may obtain the power generator information and electric line information at least by the time it calculates the required amount at S807.

Upon calculating the required amount, the control device 10 determines responsible devices for supplying reactive power (S808) and the contributions from the respective responsible devices (S809). More specifically, the control device 10 according to the present embodiment determines the responsible devices and their contributions based on the electric line information, power generator information, and load device information.

Upon determining the responsible devices, the control device 10 transmits command information to the responsible devices to command them to supply reactive power (S810). FIG. 8 shows an example where both the solar power generator 3 and the air conditioner 4 are determined as the responsible devices and receive the command. FIG. 8 shows an example operation where one air conditioner 4 is commanded to supply reactive power. However, if multiple air conditioners 4 are determined as responsible devices, the command is given to these multiple air conditioners 4. The same applies to the solar power generators 3.

In response to receiving the command, the solar power generator 3 and the air conditioner 4 supply reactive power according to the command (S811, S812). More specifically, they supply reactive power of the magnitude specified by the command information to the electric line.

The control device 10 again obtains the electric line information from each electric line sensor 6 (S813). Then, the control device 10 transmits the command information transmitted at S810 and the electric line information obtained at S804 and S813 to the management server 20 (S814). In other words, the control device 10 transmits the content of the reactive power supply control it executed and the electric line information before and after the execution of the control to the management server 20.

The management server 20 manages the received command information and electric line information as a control history (S815).

Through the operations described above, the control device 10 calculates the required amount, determines the responsible devices and their contributions, and gives the command to the responsible devices, thereby controlling the reactive power supply from the responsible devices to the electric line. In response to the command from the control device 10, the responsible devices supply reactive power to the electric line, whereby the power factor of the electric line is controlled.

(Required among calculation)

Referring to FIGS. 1, 6, 7, and 9, an operation of the control device 10 for calculating the required amount is described. The following describes an operation of the control device 10 after it obtains the electric line information from each electric line sensor 6 and the device information from the management server 20 (i.e., operation at S807 in FIG. 8).

FIG. 9 is a flowchart illustrating an example operation of the control device 10 for calculating the required amount.

As mentioned earlier, the required amount calculation unit 102 (see FIG. 5) of the control device 10 according to the present embodiment calculates the required amount upon determining whether the power factor of any electric line needs to be controlled and whether the required amount is zero or not.

The required amount calculation unit 102 determines whether the power factor control is necessary based on the device information received from the management server 20 (S901). More specifically, the required amount calculation unit 102 determines whether there exists a solar power generator 3 whose real power supplied to the electric lines exceeds a predetermined threshold (hereinafter referred to as a "target solar power generator 3"). If there are no target solar power generators 3 and the required amount calculation unit 102 determines that no power factor control is necessary for the electric lines, the operation for calculating the required amount is ended. If there exists a target solar power generator 3 and the required amount calculation unit 102 determines that the power factor of any electric line needs to be controlled (YES in S901), the operation moves to S902.

Let us assume that the predetermined threshold is 1000 kW. Referring to the device management table T2, the value of real power supply from the solar power generator 3-1-b is 1600 kW, exceeding the predetermined threshold of 1000 kW. Thus, the determination in S901 is YES.

Upon determining that the power factor of any electric line needs to be controlled, the required amount calculation unit 102 identifies a target electric line (S902). In the present embodiment, based on the electric line location information and the location information about the target solar power generator 3, the electric lines located on the supply side relative to the solar power generator 3 are chosen as candidates for the target electric line. Then, the required amount calculation unit 102 retrieves the real power upper limits from the electric line management table T1, and determines where the real power supplied to the candidate electric lines exceeds their respective upper limits. Any electric line that exceeds the upper limit is identified as the target electric line.

From the device management table T2, the solar power generator 3-1-b belongs to the device group N1. From the electric line management table T1, the electric lines located on the supply side relative to the device group N1 are the transmission line 93, the distribution line 930b, and the service line 96d. Thus, in this example, the transmission line 93, the distribution line 930b, and the service line 96d are candidates for the target electric line. Referring to FIGS. 6 and 7, in the device group N1 located on the reception side relative to the service line 96d, the total real power supply from the solar power generators 3 (3-1-a, 3-1-b) is 500 + 1600 = 2100 kW, which exceeds the real power upper limit of 1500 kW for the service line 96d. Similarly, in the device groups N1, N2, N3 located on the reception side relative to the distribution line 930b, the total real power supply from the solar power generators 3 is 3700 kW, which is less than the real power upper limit of 4500 kW for the distribution line 930b. In the device groups N1, N2, N3, N4, N5 located on the reception side relative to the transmission line 93, the total real power supply from the solar power generators 3 is 5300 kW, which is less than the real power upper limit of 7500 kW for the transmission line 93. Therefore, in this example, the service line 96d is identified as the target electric line.

Once the target electric line is identified, the required amount calculation unit 102 determines whether the required amount is zero or not (S903). More specifically, the required amount calculation unit 102 retrieves the apparent power-related parameters and the target power factor value of the target electric line from the electric line management table T1, and determines whether the power factor would exceed the target value if the real power generated by the solar power generators 3 is supplied to the target electric line.

In this manner, the required amount calculation unit 102 according to the present embodiment calculates the required amount based on the apparent power-related parameters of the target electric line and information about the real power generated and supplied by the solar power generators 3 to the electric line, and controls the supply of reactive power from each device to the electric line. This improves the accuracy of power factor control, compared to controlling the supply of reactive power from each device regardless of the apparent power-related parameters.

If the power factor of the target electric line does not exceed the target value, the required amount calculation unit 102 determines that the required amount is zero (YES in S903), and the operation for determining the required amount is ended. Conversely, if the power factor of the target electric line exceeds the target value, the required amount calculation unit 102 determines that the required amount is not zero (NO in S903), and the operation moves to S904.

In the example in FIGS. 6 and 7, no reactive power is supplied to the service line 96d. Thus, upon being supplied with real power generated by the solar power generators 3, the power factor of the service line 96d becomes 100%, exceeding the target value of 90%, so that the determination in S903 is NO.

[0182] Upon determining that the required amount is not zero, the required amount calculation unit 102 calculates the required amount (S904). More specifically, for each of the electric lines identified in S902, the required amount calculation unit 102 calculates the required amount based on Equation (1) using the electric line information and the device information.

The service line 96d is supplied with a total real power of 2100 kW from the solar power generators 3-1-a, 3-1-b, as shown in the device management table T2. As shown in the electric line management table T1, the target power factor value of the service line 96d is 90% (0.9). Populating Equation (1) with the real power P = 2100 kW and the target power factor value F = 0.9 yields the reactive power Q = 1017 kvar (rounded down to the nearest integer). Thus, the required amount of reactive power is calculated to be 1017 kvar.

This completes the calculation of the required amount.

In this manner, the required amount calculation unit 102 according to the present embodiment calculates the required amount based on information about the real power generated and supplied by the solar power generators 3 to the electric line, and controls the supply of reactive power from each device to the electric line. Instead of information about the real power generated and supplied by the solar power generators 3 to the electric line, the supply of reactive power may be controlled based on information about the real power generated by the solar power generators 3. Alternatively, the real power generated by the solar power generators 3 may be estimated using information such as the weather conditions at the installation location of each solar power generators 3, the area of the light receiving portion of each solar power generator 3, and the intensity of sunlight measured by a radiometer, and the supply of reactive power may be controlled based on information about the estimation results. All of these information items are examples of the supply information.

(Determination of responsible devices)

Referring to FIGS. 1, 6, 7 and 10, the determination of responsible devices by the control device 10 is described. Assuming that the control device 10 has calculated the required amount by the operation shown in FIG. 9, its subsequent operations are described below. As in the example used to discuss FIG. 9, it is assumed that the target solar power generator is the solar power generator 3-1-b, the target electric line subject to the power factor control is the service line 96d, and the calculated required amount is 1017 kvar.

FIG. 10 is a flowchart illustrating an example operation of the control device 10 for determining responsible devices.

In FIG. 10, the air conditioners 4 and electric storage devices 5 are referred to as "load devices," without distinguishing between them.

The responsible device determination unit 103 (see FIG. 5) of the control device 10 first calculates the supply capacity of the load devices that belong to the same one of the device groups N as the target solar power generator 3 (S1001). More specifically, the responsible device determination unit 103 identifies the air conditioners 4 and electric storage devices 5 that belong to the same one of the device groups N as the target solar power generator 3 based on the device information, and calculates their total supply capacity.

Here, the target solar power generator 3-1-b belongs to the device group N1. Referring to the device management table T2, the supply capacities of the air conditioners 4-1-a, 4-1-b, 4-1-c, which belong to the same device group N1, are 50, 80, and 60 kVA, respectively. Thus, the supply capacity of the load devices belonging to the device group N1 is calculated to be 190 kVA.

Upon calculating the supply capacity of the load devices belonging to the same one of the device groups N, the responsible device determination unit 103 determines whether the calculated supply capacity is greater than or equal to the required amount (S1002). If the supply capacity is greater than or equal to the required amount (YES in S1002), the process moves to S1010 to determine the added load devices as the responsible devices. If the supply capacity is not greater than or equal to the required amount (supply capacity is smaller than the required amount) (NO in S1002), the process moves to S1003.

Here, the supply capacity of the load devices belonging to the device group N1 is 190 kVA, which is smaller than the required amount of 1017 kvar. Thus, in this example, the determination in S1002 is NO, and the process moves to S1003.

The responsible device determination unit 103 adds the supply capacity of load devices belonging to a closest one of the device groups N other than the one the target solar power generator 3 belongs to (S1003). The closest device group is identified based on, for example, the device location information.

In this example, the supply capacity of the load devices in the device group N2, which is closest to the device group N1 is added. Specifically, the supply capacities of 80 kVA and 0 kVA of the air conditioners 4-2-a, 4-2-b, respectively, belonging to the device group N2 are added to the supply capacity of 190 kVA of the load devices belonging to the device group N1, so that the supply capacity is calculated to be 270 kVA.

Upon adding the supply capacity of the closest one of the device groups N, the responsible device determination unit 103 again determines whether the supply capacity is greater than or equal to the required amount (S1004). If the supply capacity is greater than or equal to the required amount (YES in S1004), the process moves to S1010 to determine the added load devices to be the responsible devices. Then, the contribution determination unit 104 determines the contribution from each responsible device (S1011), and the responsible devices are commanded to supply reactive power accordingly (S1012). This completes the operation for determining the responsible devices. If the supply capacity is not greater than or equal to the required amount (supply capacity is smaller than the required amount) (NO in S1004), the process moves to S1005.

Here, the supply capacity is 270 kVA, which is smaller than the required amount of 1017 kvar. Thus, in this example, the determination in S1004 is NO, and the process moves to S1005.

The responsible device determination unit 103 adds the supply capacity of load devices belonging to a next closest one of the device groups N (S1005). The next closest device group is identified based on, for example, the device location information.

In this example, the device group N3, which is the next closest device group to the device group N1 after the device group N2, has no load devices. Thus, 0 kVA is added, so that the supply capacity is still calculated to be 270 kVA.

Upon calculating the supply capacity, the responsible device determination unit 103 again determines whether the supply capacity is greater than or equal to the required amount (S1006). If the supply capacity is greater than or equal to the required amount (YES in S1006), the process moves to S 1010 to determine the added load devices to be the responsible devices. If the supply capacity is not greater than or equal to the required amount (supply capacity is smaller than the required amount) (NO in S1006), the responsible device determination unit 103 determines whether the immediately previously added one of the device groups N is the last one of the device groups N in the electric power system 90 (S1007). In other words, the responsible device determination unit 103 determines whether all device groups N connected to the electric power system 90 have been added. If the immediately previously added device group is the last one of the device groups N (YES in S1007), the process moves to S1008. If the immediately previously added device group is not the last one of the device groups N (NO in S 1007), the process returns to S 1005 and repeats S 1005 through S 1007 until the last one of the device groups N is added (until the determination in S 1007 turns out to be YES).

Here, the supply capacity at the time when the load devices of the device group N3 have been added is 270 kVA, which is smaller than the required amount of 1017 kvar. Thus, in this example, the determination in S1006 is NO, and the process moves to S1007. Since the device group N3 is not the last one of the device groups N, the process returns to S1005, where the supply capacities of 50, 50, 0 kW of the air conditioners 4-4-a, 4-4-b, 4-4-c, respectively, in the next closest device group N4 are added, resulting in the supply capacity being calculated to be 370 kVA (< 1017 kvar). Similarly, the supply capacity of 170 kVA of the electric storage device 5-5-a in the device group N5 is added, resulting in the supply capacity being calculated to be 540 kVA. Thus, the supply capacity is determined to be smaller than the required amount of 1017 kvar, and also the device group N5 is determined to be the last one of the device groups N (NO in S1006 and YES in S 1007).

Upon determining that the immediately previously added device group is the last one of the device groups N, the responsible device determination unit 103 adds the supply capacities of the solar power generators 3 (S1008). The responsible device determination unit 103 then determines whether the calculated supply capacity is greater than or equal to the required amount (S1009). Although not illustrated in FIG. 10, the addition of the supply capacities of the solar power generators 3 starts with the same one of the device groups N to which the target solar power generator 3 belongs, as in the addition of the supply capacities of the load devices. More specifically, the solar power generators 3 belonging to the same one of the device groups N, the closest one of the device groups N, the next closest one of the device groups N, ... and the last one of the device groups N are added in this order, and every time each one of the device groups N is added, it is determined whether the supply capacity is greater than or equal to the required amount. If the supply capacity becomes greater than or equal to the required amount upon adding any one of the device groups N (YES in S1009), the process moves to S1010 to determine the added load devices and solar power generators 3 as the responsible devices.

In this example, adding the supply capacities of 200, 100, 150, and 200 kVA of the solar power generators 3-1-a, 3-1-b, 3-2-a, and 3-2-b, respectively, belonging to the device groups N1, N2 yields the supply capacity of 1190 kVA, which is greater than or equal to the required amount of 1017 kvar. Thus, in S1010, all load devices belonging to the device groups N1 to N5 and the solar power generators 3 belonging to the device groups N1, N2 are determined as the responsible devices.

If the supply capacity does not become greater than or equal to the required amount even after adding the solar power generators 3 belonging to the last one of the devices group N (NO in S1009), the responsible device determination unit 103 determines all solar power generators 3 and all load devices as the responsible devices (S1013). Then, the contribution determination unit 104 commands all responsible devices to supply reactive power in the maximum possible amount (S1014). This can make the power factor of the electric line closer to the target value, even if the supply capacity falls short of the required amount of reactive power.

In the above example, the air conditioners 4-1-a, 4-1-b, 4-1-c, which belong to the same device group N1 as the target solar power generator 3-1-b, are determined as the responsible devices. In other words, the power control system 1 controls the air conditioners 4-1-a, 4-1-b, 4-1-c, which are connected to the electric power system 90 at the same point as the point of common coupling P1 at which the solar power generator 3-1-b is connected to the electric power system 90, to supply reactive power to the electric line. This improves the accuracy of power factor control, compared to causing the air conditioners 4 or electric storage devices 5 that are connected at different points from the point of common coupling P1 to supply reactive power.

In the above example, the air conditioners 4-2-a, 4-2-b belonging to the device group N2, which is different from the device group to which the target solar power generator 3-1-b belongs, are determined as the responsible devices. In other words, the power control system 1 controls the air conditioners 4-2-a, 4-2-b, which are connected to the electric power system 90 at a different point from the point of common coupling P1 at which the solar power generator 3-1-b is connected to the electric power system 90, to supply reactive power to the electric line. This improves the flexibility in power factor control, compared to controlling only the air conditioners 4 or electric storage devices 5 that are connected at the same point as the point of common coupling P1. The air conditioners 4-2-a, 4-2-b are connected via the reception-side transformer 95e to the distribution line 930b, which is connected via the point of common coupling P1 to the solar power generator 3-1-b. This improves the accuracy of power factor control, compared to controlling the air conditioners 4 or electric storage devices 5 that are connected to a different distribution line, e.g., the distribution line 930c.

Preferably, the air conditioners 4 may be prioritized over the electric storage devices 5. The electric storage device 5 repeats charging and discharging every time it supplies reactive power to electric lines, which leads to an increase in the number of charge-discharge cycles. Here, the life of the secondary battery (storage battery) of the electric storage device 5 is determined by the number of charge-discharge cycles. Thus, as the number of times the electric storage device 5 supplies reactive power to electric lines increases and consequently the number of charge-discharge cycles of the secondary battery (storage battery) increases, the life of the electric storage device 5 shortens. In contrast, load devices that supply reactive power to electric lines by means different from rechargeable batteries (storage batteries), e.g., those that supply reactive power by the capacitance of capacitors and circuits, such as the air conditioners 4, are less susceptible to impact on their life from the number of charge-discharge cycles than load devices that supply reactive power by rechargeable batteries (storage batteries). **In** other words, even if the number of times the air conditioner 4 supplies reactive power to electric lines increases, there is less impact on the life of the air conditioner 4. Hence, in the present embodiment, it is preferable that the air conditioners 4 are prioritized over the electric storage devices 5.

In the above example, the supply capacities of the solar power generators 3 are added only when the required amount cannot be secured even by adding the supply capacities of all air conditioners 4 and electric storage devices 5. In other words, the air conditioners 4 or electric storage devices 5 are prioritized over the solar power generators 3 in determining the responsible devices. As mentioned earlier, the supply of real power to the electric lines by the solar power generator 3 according to the present embodiment is limited when it supplies reactive power to the electric lines. As in the example above, by setting the priorities based on the device type and prioritizing the air conditioners 4 or electric storage devices 5 over the solar power generators 3, the supply of real power by the solar power generator 3 is less likely to be limited compared to the absence of such priority setting.

To further illustrate, the power control system 1 according to the present embodiment controls the supply of reactive power by the solar power generators 3 to the electric lines in response to the fact that the required amount cannot be secured even by adding the supply capacities of all air conditioners 4 and electric storage devices 5. This improves the flexibility in power factor control, compared to controlling only the load devices. The fact that the required amount cannot be secured even by adding the supply capacities of all air conditioners 4 and electric storage devices 5 is an example of the predetermined conditions for the load device.

In the above example, it is not essential to set the priorities based on the device type. For example, the responsible devices may be determined based only on the points at which the respective devices are connected with respect to the point of common coupling P1 at which the target solar power generator 3-1-b is connected to the electric power system 90.

Alternatively, priorities may be set based on the consumer identification information associated with each device. More specifically, a higher priority may be given to the solar power generators 3, air conditioners 4, or electric storage devices 5 owned by the same consumer as the target solar power generator 3. For example, referring to the device management table T2, the target solar power generator 3-1-b in the above example is owned by the consumer identified by the consumer identification information C1. In this case, a higher priority may be given to the devices associated with the consumer identification information C1 (belonging to the device groups N1, N4) than to other devices (belonging to the other device groups N2, N3, N5) in determining the responsible devices.

Still alternatively, priorities may be set based on the supply capacity of each device. For example, a higher priority may be given to devices with larger supply capacity, and conversely, a lower priority may be given to devices with smaller supply capacity. By setting the priorities based on the supply capacity in this manner for determination of the responsible devices, the power factor of the electric line can be adjusted with a smaller number of devices, compared to determining the responsible devices regardless of the supply capacity.

Instead of the supply capacity, priorities may be set based on the operating status or power generation status of each device. For example, a higher priority may be given to devices with a higher operating status or power generation status value than to those with a lower operating status or power generation status value in determining the responsible devices.

(Determination of contributions)

Referring now to FIGS. 1, 6, and 7, a description is given of how the control device 10 determines the contributions from the respective responsible devices. The following example illustrates the case where the target electric line is the service line 96d and all load devices and solar power generators 3 belonging to the device groups N1 to N5 are determined as the responsible devices.

As mentioned earlier, for securing the required amount calculated by the required amount calculation unit 102, the contribution determination unit 104 determines the magnitude of reactive power commanded to be supplied (which may be referred to hereinafter as a "commanded value") for each responsible device.

The contribution determination unit 104 may, for example, determine the contributions based on the position of each responsible device with respect to the target electric line. More specifically, the contribution determination unit 104 may determine the contributions such that the responsible devices located closer to the target electric line are given greater commanded values than those located farther away from the target electric line. Alternatively, using the upper limits determined by the respective supply capacities as the commanded values, the contributions may be determined sequentially starting with the responsible device closest to the target electric line, and only the responsible device farthest from the target electric line may be given a commanded value lower than its upper limit. The term "position" as used herein refers to a position in the electrical connection, and a close/far position refers to a short/long distance of the electrical connection.

For example, the air conditioners 4-1-a, 4-1-b, 4-1-c, which are located closer to the target electric line, the service line 96d, are given larger commanded values. Conversely, the solar power generator 3-5-a and the electric storage devices 5-5-a, which are located farther away from the target electric line, are given smaller commanded values. In this example, the relationship between the commanded value for the air conditioner 4-1-a and the commanded value for the solar power generator 3-5-a is determined based on their positions. More specifically, due to the fact that the position of the air conditioner 4-1-a is closer to the target electric line than the position of the solar power generator 3-5-a is (this is an example of the predetermined conditions for the position of the load device), the air conditioner 4-1-a is given a higher commanded value, and due to the fact that the position of the solar power generator 3-5-a is farther away from the target electric line than the position of the air conditioner 4-1-a is (this is an example of the predetermined conditions for the position of the power generator), the solar power generator 3-5-a is given a smaller commanded value. Controlling the supply of reactive power based on the conditions relating to the positions of load devices and the conditions relating to the positions of power generators in this manner improves the accuracy of power factor control, compared to performing control regardless of the position of each device.

For example, the contribution determination unit 104 may determine the contributions using the aforementioned priorities based on the device type, priorities based on the consumer identification information, priorities based on the supply capacity, and priorities based on the operating status or power generation status. More specifically, the contribution determination unit 104 may determine the contributions such that the responsible devices with higher priorities are given greater commanded values than those with lower priorities. Alternatively, using the upper limits determined by the respective supply capacities as the commanded values, the contributions may be determined sequentially starting with the responsible device with a higher priority, and only the responsible device with the lowest priority may be given a commanded value lower than its upper limit.

[Control Method]

The above embodiment is also understood as a control method for controlling the supply of reactive power from the air conditioners 4 to the electric lines. More specifically, the present embodiment can be viewed as a control method including steps of: acquiring supply information relating to the supply of power to the electric lines by the solar power generators 3; and controlling the supply of reactive power to the electric lines by the air conditioners 4 or electric storage devices 5 according to the supply information.

[Variations]

(Number of power control systems 1)

In the above embodiment, the power control system 1 has been described as having one control device 10 and one management server 20. However, the number of control devices 10 and management servers 20 is not limited. The power control system 1 may have more than one control devices 10 and more than one management servers 20. For example, a control device 10 and a management server 20 may be provided for each of the device groups N. When the power control system 1 includes multiple control devices 10 and multiple management servers 20, these devices are connected by a network and configured as a system capable of exchanging information between the devices.

(Other load device examples)

In the above embodiment, the air conditioner 4 has been described as an example of the load device including a compensating power supply unit, a conversion unit, and a heat pump unit. Other example load devices including a conversion unit and a heat pump unit include those used in heating, ventilation, and air conditioning (HVAC) systems, such as showcases that condition internal temperatures, coolers, refrigerating machines, and water heaters. Such load devices including a heat pump unit are provided with an AF 41a, which can be used as a compensating power supply unit, and a power conversion unit 41b, which can be used as a conversion unit, or similar functional components, and does not require new installation of a compensating power supply unit and a conversion unit. Thus, these load devices have reduced complexity compared to those that do not include a heat pump unit.

However, load devices are not limited to those including a heat pump unit, and may be various devices that are used in connection to the electric power system 90, such as lighting devices and display devices, for example.

As mentioned earlier, for load devices that use a secondary battery (storage battery) as a compensating power supply unit, such as the electric storage device 5, an increase in the number of times reactive power is supplied to the electric lines shortens their life. Hence, the compensating power supply unit of the load devices is preferably implemented by means different from the secondary battery (storage battery); for example, it may preferably be implemented by using a capacitor as a voltage source, like the AF41a of the air conditioner 4. This prevents the life of the load devices from being shortened due to the supply of reactive power to the electric lines.

(Other power generator examples)

The above embodiment has described using the solar power generators 3 connected on the reception side relative to the service line 96d. However, the solar power generators 3 may be connected at positions farther on the supply side. For example, the power generator may be a so-called mega-solar power generator, which generates and supplies power on a large scale. The power generators are not limited to solar power generators, and may be various power generators that employ renewable energy sources, such as wind power, hydroelectric power, geothermal power, biomass power, etc.

In the above embodiment, the power plant 91 has been described as generating the largest power among the facilities and devices connected to the electric lines. In other words, the power generators such as the solar power generators 3 have been described as generating less power than the power plant 91. However, the magnitude of power generated by the power generators is not limited; for example, the power generators may generate more power than the power plant 91. The power generators may be a device or facility that supplies the power generated at the power plant 91 to the transmission line 93.

(Target power factor value)

The above embodiment has described calculating the required amount based on the target power factor value, which is an example of the predetermined power factor, and controlling the supply of reactive power from each device to the electric line. However, the control of the supply of reactive power by the control device 10 may at least be based on the supply information, and need not use the predetermined power factor. However, controlling the supply of reactive power from the load devices based on both the predetermined power factor and the supply information improves the accuracy of power factor control, compared to controlling the reactive power supply regardless of the predetermined power factor.

(Loss information)

Reactive power supplied from each device may be lost before reaching a target electric line due to impedance of the path, resistance, intermediately connected loads, and other factors. Hence, the control device 10 may obtain loss information relating to the loss of reactive power on the path to the target electric line and control the supply of reactive power to the electric line based on this loss information. For example, in the example in FIG. 1, when reactive power is supplied from the air conditioner 4-2-a to the service line 96d, reactive power loss may occur on the path including the device connection line 7, the service line 96e, the reception-side transformers 95d, 95e, and the distribution line 930b. The contribution determination unit 104 of the control device 10 may obtain loss information relating to this path and determine the commanded value for the air conditioner 4-2-a, taking into account the loss on the path.

The loss information may be any information that can be used to calculate or estimate the loss on the path, such as the length and thickness of the distribution line serving as the path, the type of transformer, and the size of the load.

(Determination of responsible devices and contributions)

The above embodiment has described determining the responsible devices from among all devices connected to the electric power system 90 based on the location of each device or other factors. In other embodiments, some or all of the devices connected to the electric power system 90 may be designated in advance, and the designated devices may be determined as the responsible devices.

The above embodiment has described determining the commanded value for each device based on the location of each device or other factors. In other embodiments, the commanded value for each responsible device may be predetermined. For example, the same commanded value may be predetermined for all responsible devices. In another example, a commanded value may be predetermined for each device that will be used when that device is determined as the responsible device.

(Identification of target electric line)

In the above embodiment, the target electric line for power factor control has been identified from candidate electric lines located on the supply side relative to the target solar power generator 3, based on the total real power supplied by the solar power generators 3 associated with each electric line and the real power upper limit for each electric line. In other embodiments, a predetermined voltage threshold may be established for each electric line, and any electric line that exceeds its voltage threshold may be identified as a target electric line. The required amount of reactive power may then be calculated, and the power generators and load devices associated with the identified electric line may be determined as responsible devices to make contributions to the supply of reactive power.

When there are multiple electric lines that meet the requirements for the target electric line, an electric line located farther on the supply side may be preferentially identified as the target electric line.

Furthermore, when the total real power supplied by power generators associated with an electric line exceeds a predetermined threshold, such an electric line may be chosen as a candidate for identification of the target electric line. The identification of the target electric line is based, for example, on the real power upper limit or voltage threshold for each electric line described above. The predetermined threshold for the total real power is, for example, the total coupled power, which is the maximum value of power that can be output to an electric line by the power generators associated with the electric line, multiplied by a certain ratio (e.g., 90%).

In other embodiments, one of the service lines 96 with which the target power generator is associated may be identified as the target electric line. The required amount may then be calculated from the real power and target power factor value of the identified one of the service lines 96, and the power generators and load devices associated with the identified electric line may be determined as the responsible devices to make contributions to the supply of reactive power.

(Load device including control unit)

In the above embodiment, the control device 10 separate from the load devices has been described as commanding them to supply reactive power. In other embodiments, the control device 10 and a load device may be configured as a single unit, and the various functions of the control device 10 may be implemented by an information processing device included in the load device. For example, the information processing device 40 in any of the air conditioners 4 in the electric power system 90 may command each device as well as its own device to supply reactive power. Alternatively, the management server 20 and a load device may be configured as a single unit, and the power generator information and load device information may be managed by the information processing device 40, for example. Still alternatively, the control device 10, the management server 20, and a load device may all be configured as a single unit. In other words, the control device 10 and the management server 20 may be implemented inside the information processing device 40 of one air conditioner 4. In order to implement the acquisition unit configured to acquire supply information relating to the supply of power to electric lines by a power generator for generating power and supplying the power to the electric lines and the control unit configured to control, according to the supply information acquired by the acquisition unit, the supply of reactive power to the electric lines by a load device including a compensating power supply unit capable of supplying reactive power to the electric lines, a simplest configuration can be one in which the control device 10 and the management server 20 are implemented inside an air conditioner 4 to cooperate with the corresponding solar power generator(s) 3.

Alternatively, the control device 10 and the management server 20 may be implemented inside the information processing device 30 of a solar power generator 3.

It should be noted that the configurations described above are not limited to the above embodiments and variations, and may be modified without departing from the spirit of the present disclosure. In other words, it will be understood that various modifications can be made to the forms and details without departing from the sprit and scope of the appended claims.

For example, part of the configurations described above may be omitted, or other features may be added to the configurations described above. Also, a configuration included in one configuration example of the multiple configuration examples described above may be replaced with a configuration included in another configuration example, or a configuration included in one configuration example may be added to another configuration example.

Reference Signs List

1 Power control system
3 Solar power generator
4 Air conditioner
5 Electric storage device
6, 6a, 6b, 6c, 6d, 6e, 6f, 6g, 6h Electric line sensor
10 Control device
20 Management server
10a, 30a, 40a CPU
41 Heat pump device
41a AF
90 Electric power system

91 Power plant
93 Transmission line
95, 95d, 95e, 95f, 95g, 95h Reception-side transformer
96, 96d, 96e, 96f, 96g, 96h Service line
930, 930b, 930c Distribution line

**Claims**

1. A power control system comprising:

an acquisition unit configured to acquire supply information relating to supply of power to electric lines by a power generator for generating power and supplying the power to the electric lines; and a control unit configured to control, according to the supply information acquired by the acquisition unit, supply of reactive power to the electric lines by a load device comprising a compensating power supply unit capable of supplying reactive power to the electric lines.

2. The power control system according to claim 1, wherein

the load device comprises a plurality of load devices distributed on the electric lines, and the control unit is configured to control the supply of reactive power to the electric lines by the plurality of load devices according to the supply information.

3. The power control system according to claim 2, wherein a point of common coupling on the electric lines at which the power generator is coupled to an electric power system is different from points on the electric lines at which the plurality of load devices is coupled to the electric power system.

4. The power control system according to claim 3, wherein the plurality of load devices is connected via a transformer to a distribution line on the electric power system, the distribution line being connected to the power generator via the point of common coupling.

5. The power control system according to claim 1, wherein

the load device comprises a plurality of load devices that are connected to an electric power system at a same point as a point of common coupling on the electric lines at which the power generator is coupled to the electric power system, and the control unit is configured to control the supply of reactive power to the electric lines by the plurality of load devices according to the supply information acquired by the acquisition unit.

6. The power control system according to claim 1, wherein

the compensating power supply unit of the load device is capable of adjusting apparent power of the load device, and
when supplying reactive power to the electric lines according to the supply information, the compensating power supply unit is configured to limit an adjustment to the apparent power of the load device, the adjustment being performed by the compensating power supply unit.

7. The power control system according to claim 1, wherein the load device comprises the compensating power supply unit capable of supplying reactive power using a capacitor as a voltage source.

8. The power control system according to claim 1, wherein

the acquisition unit is configured to acquire electric line information relating to apparent power of the electric lines, and
the control unit is configured to control the supply of reactive power to the electric lines by the load device according to the electric line information.

9. The power control system according to claim 8, wherein
the electric line information comprises electric line information about an electric line of the electric lines, the electric line being branched off from a distribution line that is connected to the power generator via a point of common coupling at which the power generator is associated with an electric power system, the electric line leading to the point of common coupling.

10. The power control system according to claim 1, wherein the control unit is configured to control the supply of reactive power to the electric lines by the load device according to a predetermined power factor for the electric lines and the supply information.

11. The power control system according to claim 1, wherein the control unit is configured to control the supply of reactive power to the electric lines by the power generator according to predetermined conditions for the load device.

12. The power control system according to claim 11, wherein the control unit is configured to control relationship between the supply of reactive power to the electric lines by the power generator and the supply of reactive power by the load device, based on predetermined conditions for a position of the load device and predetermined conditions for a position of the power generator.

13. The power control system according to claim 1, wherein the acquisition unit is configured to acquires loss information relating to loss of reactive power supplied by the load device in electric lines from the load device to the power generator, and
the control unit is configured to control the supply of reactive power by the load device to the electric lines according to the loss information.

14. A load device comprising:

an acquisition unit configured to acquire supply information relating to supply of power to electric lines by a power generator for generating power and supplying the power to the electric lines; and
a compensating power supply unit configured to supply reactive power to the electric lines according to the supply information acquired by the acquisition unit.

15. A control method comprising steps of:

acquiring supply information relating to supply of power to electric lines by a power generator for generating power and supplying the power to the electric lines; and
controlling, according to the supply information, supply of reactive power to the electric lines by a load device comprising a compensating power supply unit capable of supplying reactive power to the electric lines.

16. An information processing device comprising:

a control unit configured to control an exchange of information with other devices, wherein
the control unit is configured to:

acquire supply information relating to supply of power to electric lines by a power generator for generating power and supplying the power to the electric lines; and
transmit command information to a load device comprising a compensating power supply unit capable of supplying reactive power to the electric lines, the command information commanding the load device to supply reactive power to the electric lines according to the supply information.

17. A load device comprising:

a receiving unit configured to receive command information, the command information commanding the load device to supply reactive power to electric lines based on supply information relating to supply of power to the electric lines by a power generator for generating power and supplying the power to the electric lines; and
a compensating power supply unit configured to supply reactive power to the electric lines according to the command information received by the receiving unit.

18. The load device according to claim 17, further comprising:

a conversion unit configured to convert received power; and
a heat pump unit configured to consume the power converted by the conversion unit to adjust temperature or humidity, wherein
the compensating power supply unit is configured to supply reactive power to a power receiving path for the conversion unit using a capacitor as a voltage source.

FIG.1

FIG.2

# FIG.3

INFORMATION PROCESSING DEVICE    30

30a CPU

30b ROM

30c RAM

30d STORAGE UNIT

30e COMMUNICATION UNIT

30f

POWER GENERATOR    31

31c

31a POWER CONVERSION UNIT

31b POWER GENERATION UNIT

3

EP 4 528 963 A1

FIG.4

FIG.5

FIG.6

EP 4 528 963 A1

T1

| ELECTRIC LINE IDENTIFICATION INFORMATION | LOCATION/ CONNECTED DEVICE GROUPS | REAL POWER [kW] | REACTIVE POWER[kvar] | APPARENT POWER [kVA] | CURRENT POWER FACTOR VALUE [%] | TARGET POWER FACTOR VALUE [%] | REAL POWER UPPER LIMIT [kW] |
|---|---|---|---|---|---|---|---|
| 6a | N1,N2,N3,N4,N5 | 4400 | 0 | 4400 | 100 | 90 | 7500 |
| 6b | N1,N2,N3 | 2800 | 0 | 2800 | 100 | 90 | 4500 |
| 6c | N4,N5 | 1600 | 0 | 1600 | 100 | 90 | 3000 |
| 6d | N1 | 1200 | 0 | 1200 | 100 | 90 | 1500 |
| 6e | N2 | 1000 | 0 | 1000 | 100 | 90 | 1500 |
| 6f | N3 | 600 | 0 | 600 | 100 | 90 | 1500 |
| 6g | N4 | 1000 | 0 | 1000 | 100 | 90 | 1500 |
| 6h | N5 | 600 | 0 | 600 | 100 | 90 | 1500 |

**FIG.7**

T2

| DEVICE IDEN-TIFICATION INFORMATION | LOCATION/ DEVICE GROUPS | GROUP OF BELONGING | POWER SOURCE | OPERATING STATUS [kW] | POWER GENERATION STATUS [kW] | REAL POWER SUPPLY [kW] | REACTIVE POWER SUPPLY [kvar] | SUPPLY CAPACITY [kVA] | CONSUMER IDENTIFICATION INFORMATION |
|---|---|---|---|---|---|---|---|---|---|
| 3-1-a | N1 | – | ON | – | 500 | 500 | 0 | 200 | C1 |
| 3-1-b | N1 | – | ON | – | 1600 | 1600 | 0 | 100 | C1 |
| 4-1-a | N1 | G1 | ON | 30 | – | – | 0 | 50 | C1 |
| 4-1-b | N1 | G1 | ON | 20 | – | – | 0 | 80 | C1 |
| 4-1-c | N1 | G1 | ON | 15 | – | – | 0 | 60 | C1 |
| 3-2-a | N2 | – | ON | – | 400 | 400 | 0 | 150 | C2 |
| 3-2-b | N2 | – | ON | – | 600 | 600 | 0 | 200 | C2 |
| 4-2-a | N2 | G2 | ON | 20 | – | – | 0 | 80 | C2 |
| 4-2-b | N2 | G2 | OFF | 0 | – | – | 0 | 0 | C2 |
| 3-3-a | N3 | – | ON | – | 600 | 600 | 0 | 100 | C3 |
| 3-4-a | N4 | – | ON | – | 400 | 400 | 0 | 100 | C1 |
| 3-4-b | N4 | – | ON | – | 600 | 600 | 0 | 100 | C1 |
| 4-4-a | N4 | G4 | ON | 30 | – | – | 0 | 50 | C1 |
| 4-4-b | N4 | G4 | ON | 30 | – | – | 0 | 50 | C1 |
| 4-4-c | N4 | G4 | Error | 0 | – | – | 0 | 0 | C1 |
| 3-5-a | N5 | – | ON | – | 600 | 600 | 0 | 100 | C5 |
| 5-5-a | N5 | – | ON | – | – | – | 0 | 170 | C5 |

EP 4 528 963 A1

FIG.8

| CONTROL DEVICE —10 | MANAGEMENT SERVER —20 | AIR CONDITIONER —4 | SOLAR POWER GENERATOR |

3

SEND LOAD DEVICE INFORMATION —S801

SEND POWER GENERATOR INFORMATION

MANAGE AS DEVICE INFORMATION —S803

S802

OBTAIN ELECTRIC LINE INFORMATION —S804

S805
REQUEST DEVICE INFORMATION

SEND DEVICE INFORMATION —S806

CALCULATE REQUIRED AMOUNT OF REACTIVE POWER —S807

DETERMINE RESPONSIBLE DEVICES FOR REACTIVE POWER SUPPLY —S808

DETERMINE CONTRIBUTIONS FROM RESPONSIBLE DEVICES —S809

COMMAND RESPONSIBLE DEVICES TO SUPPLY REACTIVE POWER —S810

SUPPLY REACTIVE POWER AS COMMANDED —S811

S812— SUPPLY REACTIVE POWER AS COMMANDED

OBTAIN ELECTRIC LINE INFORMATION —S813

SEND COMMAND INFORMATION AND ELECTRIC LINE INFORMATION —S814

MANAGE AS CONTROL HISTORY —S815

FIG.9

## FIG.10

START

↓

CALCULATE SUPPLY CAPACITY OF LOAD DEVICES IN THE SAME DEVICE GROUP — S1001

↓

REQUIRED AMOUNT ≤ SUPPLY CAPACITY? — S1002 — YES →

↓ NO

ADD SUPPLY CAPACITY OF LOAD DEVICES IN CLOSEST DEVICE GROUP — S1003

↓

REQUIRED AMOUNT ≤ SUPPLY CAPACITY? — S1004 — YES →

↓ NO

ADD SUPPLY CAPACITY OF LOAD DEVICES IN NEXT CLOSEST DEVICE GROUP — S1005

↓

REQUIRED AMOUNT ≤ SUPPLY CAPACITY? — S1006 — YES →

↓ NO

LAST DEVICE GROUP? — S1007 — NO

↓ YES

ADD SUPPLY CAPACITY OF SOLAR POWER GENERATORS — S1008

↓

REQUIRED AMOUNT ≤ SUPPLY CAPACITY? — S1009 — YES →

↓ NO

S1013 — DETERMINE ALL DEVICES AS RESPONSIBLE DEVICES

DETERMINE ADDED DEVICES AS RESPONSIBLE DEVICES — S1010

DETERMINE CONTRIBUTIONS FROM RESPONSIBLE DEVICES — S1011

COMMAND EACH DEVICE TO SUPPLY IN MAXIMUM AMOUNT — S1014

COMMAND RESPONSIBLE DEVICES TO SUPPLY — S1012

↓

END

# INTERNATIONAL SEARCH REPORT

| | International application No. |
|---|---|
| | **PCT/JP2023/018225** |

## A. CLASSIFICATION OF SUBJECT MATTER

*H02J 3/16*(2006.01)i; *F24F 11/80*(2018.01)i; *H02J 3/18*(2006.01)i; *H02J 3/32*(2006.01)i; *H02J 3/38*(2006.01)i; *H02J 13/00*(2006.01)i
FI:  H02J3/16; F24F11/80; H02J3/18 135; H02J3/32; H02J3/38 130; H02J13/00 311R

According to International Patent Classification (IPC) or to both national classification and IPC

## B. FIELDS SEARCHED

Minimum documentation searched (classification system followed by classification symbols)

H02J3/16; F24F11/80; H02J3/18; H02J3/32; H02J3/38; H02J13/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X | WO 2019/053941 A1 (MITSUBISHI ELECTRIC CORP.) 21 March 2019 (2019-03-21) paragraphs [0012]-[0260], fig. 1-19 | 1-5, 10, 14-16 |
| Y | | 7, 17-18 |
| A | | 6, 8-9, 11-13 |
| Y | WO 2022/071033 A1 (DAIKIN INDUSTRIES, LTD.) 07 April 2022 (2022-04-07) paragraphs [0346], [0349], [0362], [0364], [0365], [0444] | 7, 17-18 |
| A | WO 2022/071034 A1 (DAIKIN INDUSTRIES, LTD.) 07 April 2022 (2022-04-07) entire text, all drawings | 1-18 |

☐ Further documents are listed in the continuation of Box C.  ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 July 2023** | **25 July 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/018225**

| Patent document cited in search report | | | Publication date (day/month/year) | Patent family member(s) | | | Publication date (day/month/year) |
|---|---|---|---|---|---|---|---|
| WO | 2019/053941 | A1 | 21 March 2019 | US 2020/0274357 A1 paragraphs [0031]-[0301], fig. 1-19 CN 111095716 A | | | |
| WO | 2022/071033 | A1 | 07 April 2022 | (Family: none) | | | |
| WO | 2022/071034 | A1 | 07 April 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020182276 A

- JP 6713237 B